# EUROPEAN PATENT APPLICATION

(11) **EP 2 602 986 A1**
(43) Date of publication of application: **12.06.2013**
(21) Application number: 12820122.5
(22) Date of filing: 02.07.2012
(51) Int. Cl.: H04M 3/53, H04M 15/00

(54) **SERVER DEVICE FOR AUDIO COMMUNICATION, AND AUDIO COMMUNICATION SYSTEM**

(30) Priority: 29.07.2011 JP 2011166351
(71) Applicant: NTT Docomo, Inc., Tokyo 100-6150 (JP)
(72) Inventor: KOJO, Yu, Tokyo 100-6150 (JP); ITO, Kengo, Tokyo 100-6150 (JP)
(74) Representative: Henseler, Daniela
(86) International application number: PCT/JP2012/004281
(87) International publication number: WO 2013/018277

(57) **Abstract**

A non-billing instruction function terminates a transmission of billing source information for a billing process to a billing server, and when a PB receiving function detects switching of the content of a telephone call while the connection of a call is maintained, a billing source information transmitting function transmits the billing source information to the billing server. This eliminates an occasion that a service is applied or is not applied depending on an operation given by a user, thereby providing the service equally.

## Description

### Technical Field

The present invention relates to a voice communication server apparatus and a voice communication system, and more particularly, to a voice communication server apparatus and a voice communication system that provide a service to a telephone terminal like a mobile telephone terminal.

### Background Art

Example services provided to a telephone terminals are an answering machine service and a Voice Mail (hereinafter, referred to as a voice mail) service. The former one is a service that can carry a voice message when a called side is unable to get a phone because, for example, the called side is busy or is in an out-of-service area. The latter one is a service that can carry a voice message without calling up a mobile telephone of the called side. When a voice mail service via a mobile telephone network is used, the following processes are carried out. That is, when it is attempted to record a voice message, an outgoing call is made with a specific number for utilizing the voice mail service being added to the header of a telephone number of a person (a called side) to whom a user wants to send a voice message. The specific number is a unique number to each network (a carrier network) operated and managed by a communication carrier. In the case of, for example, the voice mail service disclosed in Non-patent Document 1, "*2020" is added to a header, and an outgoing call is made with "*2020090BBBBBBBB" (where B is an arbitrary number). Moreover, in the case of the voice mail service disclosed in Non-patent Document 2, "1612" is added to a header, and an outgoing call is made with "16120090BBBBBBBB" (where B is an arbitrary number). By making such an outgoing call, a call is connected to a voice mail server, and it becomes possible to record a voice message. In the case of the answering machine service disclosed in Non-patent Document 3, a voice message can be recorded from mobile telephones of the other carrier networks.

When a voice message is recorded, both answering machine service and Voice Mail (hereinafter, referred to as a voice mail) service notify a called side of the record of the voice message. When the called side which has received such a notification selects (depresses) a specific part (e.g., a part displayed as "replay") included in the notification or makes an outgoing call with a specific number (e.g., "*2021" in the case of Non-patent Document 1) different from the case in which a voice message is recorded being added to a header, it becomes possible to replay the voice message.

### Prior Art Documents

### Non-patent Documents:

Non-patent Document 1: "Voice Delivery Service", NTT Docomo, [searched on May 31, 2011], Internet <URL:http://www.nttdocomo.co.jp/service/communication/koe _no_takuhaibin/>
Non-patent Document 2: "Voice Mail", Au by KDDI Corporation, [searched on May 31, 2011], Internet <URL:http://www.au.kddi.com/voice-mail/index.html>
Non-patent Document 3: "How to Use Answering Machine", Soft Bank, [searched on May 31, 2011], Internet <URL:http://mb.softbank.jp/mb/support/3G/voice_mail/06-02 .html>

### Summary of the Invention

### Problem to be Solved

In the services relating to a telephone call, a calling rate is reduced in some cases when a certain state is satisfied such as a telephone call between families. When, for example, a certain state is satisfied such that a called side is a family member of a user, a discount of a calling rate (hereinafter, referred to as a family discount service) may be applied. Hence, the family discount service may be applied when a message is recorded through the voice mail service and the answering machine service.

When, for example, it is attempted to replay a message recorded through the voice mail service and the answering machine service, the destination of a call to replay the message is a voice mail server apparatus or an answering machine server apparatus, and even if a person who recorded the message is a family of the user, no family discount service is applied. Next, when it is attempted to record a reply message following to the replaying of the message while the call is maintained, a billing rate at the time of making an outgoing call is directly applied, and thus no family discount service is applied.

When, however, once a call is disconnected before a reply message is recorded and a new outgoing call is made to record a message, the family discount service is applied. The same is true of the answering machine service like the voice mail service.
It is common that a reply message is recorded but the family discount service is applied or is not applied depending on an operation given by the user. Accordingly, the service cannot be provided equally.
The present invention has been made in order to address the drawbacks of the background arts, and it is an object of the present invention to provide a voice communication server apparatus and a voice communication system that can provide a service equally.

### Solution to the Problem

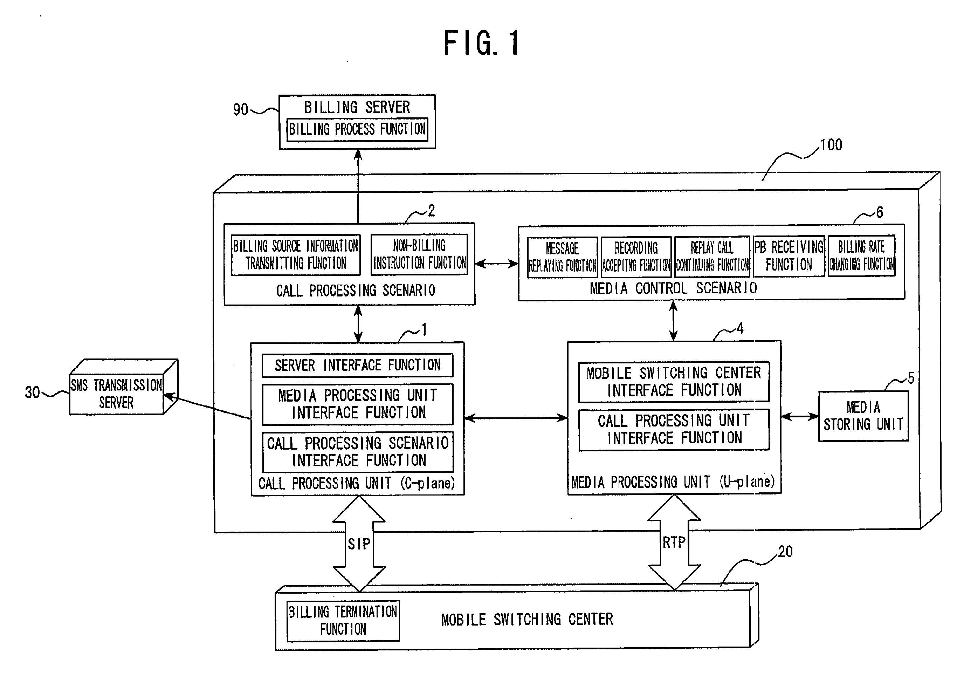

According to an aspect of the present invention, there is provided a voice communication server apparatus comprising: a detecting unit (e.g., a PB receiving function and a replay call continuing function in FIG. 1) configured to detect switching of a content of a call while a connection of the call is maintained to an apparatus having a function of transmitting billing source information for a billing process to a billing server (e.g., a billing server 90 in FIG. 1) ; and a billing source information transmitting unit (e.g., a billing rate changing function or a billing source information transmitting function in FIG. 1) configured to generate the billing source information for the billing process when the detecting unit detects the switching of the content of the telephone call to transmit the generated billing source information to the billing server.

According to such a configuration, generation of the billing source information when the switching of the content of the telephone call is detected eliminates an occasion in which a server is applied or is not applied depending on an operation given by a user, and the service can be equally provided.
The voice communication server apparatus may further include a storing unit configured to store a voice message, and the detecting unit may detect, as in the switching of the content of the telephone call, a change from one state to another state between a replaying state of the voice message stored in the storing unit and a recording state of a voice message in the storing unit.

According to such a configuration, it becomes possible to detect a change between the replaying state of a message and the recording state while the connection state of the call is maintained, and the service can be equally provided.
The voice communication server apparatus may further include a storing unit configured to store a voice message, and the detecting unit may detect, as the switching of the content of the telephone call, a change from one state to another state between a replaying state of the voice message stored in the storing unit and a calling state by an outgoing call made to a recording source terminal of the voice message.

According to such a configuration, it becomes possible to detect a change between the replaying state of a message and the calling state by an outgoing call made to the recording source terminal while the connection state of the call is maintained, and the service can be equally provided.
The voice communication server apparatus may further include a storing unit that stores a voice message, and the detecting unit may detect, as in the switching of the content of the telephone call, a change from one state to another state between a replaying state of the voice message stored in the storing unit and a recording state of a voice message in a storing unit of another voice communication server apparatus corresponding to a recording source terminal of the former voice message.

When the voice communication server employs the above-explained configuration, while the connection state of a call is maintained, a change between the replaying state of a message and a recording state of a message in the storing unit of another voice communication server apparatus corresponding to the recording source terminal, and the service can be equally provided.
It is desirable that the billing source information should include information indicating a type of the content of the telephone call, and information indicating a duration of the telephone call, and the billing server should perform billing process based on the billing source information. Transmission of the information including the kind of the content of the telephone call and the duration of telephone call enables the billing server to perform the billing process.

The voice communication server apparatus may further include a non-billing instruction unit that instructs a termination of a transmission of the billing source information.
According to such a configuration, a transmission of the billing source information by the mobile switching center can be terminated. This eliminates an occasion in which the service is applied or is not applied depending on an operation given by the user, and the service can be equally provided.

According to another aspect of the present invention, there is provided a voice communication system comprising: any of the voice communication server of the above-explained aspects; and a mobile switching center (e.g., a mobile switching center 20 in FIG. 1) including a billing termination unit (e.g., a billing termination function in FIG. 1) configured to terminate a transmission of the billing source information to the billing server in response to an instruction to terminate a transmission of the billing source information instructed by the non-billing instruction unit.
According to such a configuration, a process by the mobile switching center can be terminated, and the service can be equally provided while the connection state of a call is maintained.

According to an aspect of the present invention, there is provided a voice communication system comprising any one of the voice communication server apparatus of the above aspects, in which the billing source information transmitting unit transmits billing source information including identifier information capable of associating billing source information transmitted from the mobile switching center with the billing source information transmitted from the voice communication server device, and the voice communication system further comprises a billing server having a billing process function for performing a billing process with respect to only either one of the billing source information transmitted from the mobile switching center and the billing source information transmitted from the billing source information transmitting unit.

When the voice communication system employs the above-explained configuration, the billing process function in the billing server checks (checking) the billing source information transmitted from the mobile switching center with the billing source information transmitted from the voice communication server apparatus, and does not perform billing on the billing source information transmitted from the mobile switching center without terminating the process by the mobile switching center. Accordingly, the service can be equally provided while the connection state of a call is maintained.

### Advantageous Effects of the Invention

According to the present invention, a transmission of the billing source information used for a billing process to the billing server is terminated, and when switching of a call content is detected with the connection of a call being continuous, the billing source information is transmitted to the billing server. Accordingly, it does not occur that a service is applied or is not applied depending on an operation given by a user, and thus the service can be equally provided.

### Brief Description of the Drawings

FIG. 1 is a block diagram illustrating a function of a voice communication server apparatus, etc., according to a first embodiment;
FIG. 2 is a block diagram illustrating a function of the voice communication server apparatus, etc., when a mobile switching center does not have the billing termination function in the first embodiment;
FIG. 3 is a sequence diagram illustrating an example operation of the voice communication server apparatus according to the first embodiment of the present invention;
FIG. 4 is a sequence diagram illustrating a signal exchange in the voice communication server apparatus explained with reference to FIG. 3 according to the first embodiment of the present invention;
FIG. 5 is a block diagram illustrating a function of a voice communication server apparatus, etc., according to a second embodiment of the present invention;
FIG. 6 is a block diagram illustrating a function of the voice communication server apparatus, etc., when a mobile switching center does not have the billing termination function in the second embodiment;
FIG. 7 is a sequence diagram illustrating a process when a Conference function of a voice mail server apparatus is utilized according to the second embodiment of the present invention;
FIG. 8 is a sequence diagram illustrating a process when no Conference function of the voice mail server apparatus is utilized according to the second embodiment of the present invention;
FIG. 9 is a sequence diagram illustrating a signal exchange in the voice mail server apparatus when the Conference function is utilized according to the second embodiment of the present invention;
FIG. 10 is a sequence diagram illustrating a signal exchange in the voice mail server apparatus when no Conference function is utilized according to the second embodiment of the present invention;
FIG. 11 is a sequence diagram illustrating a process when a recording source is a telephone terminal of another carrier network and the Conference function of the voice mail server apparatus is utilized according to the second embodiment of the present invention;
FIG. 12 is a sequence diagram illustrating a process when a recording source is a telephone terminal of another carrier network, and no Conference function of the voice mail server apparatus is utilized;
FIG. 13 is a block diagram illustrating a function of a voice communication server apparatus according to a third embodiment of the present invention;
FIG. 14 is a block diagram illustrating a function of the voice communication server apparatus, etc. , when a mobile switching center does not have the billing termination function in the third embodiment;
FIG. 15 is a sequence diagram illustrating a signal exchanged between respective devices when a reply while a message is replayed is realized through the Conference function according to the third embodiment of the present invention;
FIG. 16 is a sequence diagram illustrating a signal exchanged between respective devices when a replaying process is continued after a reply is made while a message is replayed through the Conference function according to the third embodiment of the present invention;
FIG. 17 is a sequence diagram illustrating a signal exchanged between respective units in a voice mail server apparatus when the Conference function is utilized according to the third embodiment of the present invention;
FIG. 18 is a sequence diagram illustrating a signal exchanged between respective devices when a reply while a message is replayed is realized without the Conference function according to the third embodiment of the present invention;
FIG. 19 is a sequence diagram illustrating a signal exchanged between respective devices when a replaying process is continued after a reply is made while a message is replayed without the Conference function according to the third embodiment of the present invention; and
FIG. 20 is a sequence diagram illustrating a signal exchanged between respective units in the voice mail server apparatus when no Conference function is utilized according to the third embodiment of the present invention.

### Description of Embodiments

Embodiments of the present invention will be explained below with reference to the accompanying drawings. In respective figures to be referred in the following explanation, the same or equivalent portions as those of the other figures will be denoted by the same reference numerals.
The following explanation will be given of a case in which a voice mail server apparatus of the present embodiment is provided over a mobile telephone network.
Moreover, to simplify the explanation, a D company that is a mobile telephone service company is a first company, while an A company that is another mobile telephone service company is a second company. A local carrier network is a mobile telephone network operated and managed by the first company, while another carrier network is a mobile telephone network operated and managed by a second company.

Actual mobile telephone phone networks are provided with devices, such as a wireless base station device and a base station control device, but in order to simplify the explanation, those devices are not illustrated and the explanation thereof will be also omitted. Furthermore, a mobile switching center provided in a telephone network is not illustrated and the explanation thereof will be omitted as needed in order to simplify the explanation. A telephone terminal present in the following explanation is a device which has a fixed number and is capable of performing a voice communication. The telephone terminal includes, in addition to a conventional mobile telephone terminal, a smart phone and a fixed-line telephone terminal.

### (First Embodiment)

An explanation will be given of a function of a voice communication server apparatus according to the present embodiment with reference to FIG. 1. With reference to FIG. 1, a voice communication.server apparatus 100 of the present embodiment includes a call processing unit 1, a call processing scenario 2, a media processing unit 4, a media storing unit 5, and a media control scenario 6.

The call processing unit 1 includes a server interface function that realizes a signal exchange with an external device (e.g., an SMS transmission server 30 to be discussed later), a media processing interface function that notifies the media processing unit of the media control scenario activated when a guidance is output, and a call processing scenario interface function that activates the call processing scenario when receiving a connection request signal.

The call processing scenario 2 is a group of programs activated by the call processing scenario interface function of the call processing unit 1. The call processing scenario 2 includes a program that realizes a connection requirement transfer function for making an outgoing call to a message recording source , a program that realizes a non-billing instructing function for instructing a termination of a transmission of billing source information from a mobile switching center 20 to a billing server 90, and a program for realizing a billing source information transmitting function that transmits the billing source information to the billing server 90.

An instruction for terminating the transmission of the billing source information by the non-billing instructing function includes, in addition to an instruction for terminating the transmission of the billing source information generated by the mobile switching center 20 to the billing server 90, an instruction for terminating the generation itself of the billing source information by the mobile switching center 20.
The billing source information to be transmitted to the billing server includes information indicating a kind of the content of a telephone call, and information indicating a calling duration of that telephone call. The kind of the content of a telephone call is, for example, whether or not the content of the telephone call is a replaying of a voice message, whether or not the content of the telephone call is a recording of a voice message (including a recording of a voice message for reply). The calling duration is a period from a call start time to a call end time (call termination time) for each kind of the content of the telephone call. The billing server 90 has a billing process function of performing a billing process by obtaining the billing source information. The billing process includes, for example, a process of calculating a frequency of billing.

The media processing unit 4 includes a mobile switching center interface function of transmitting, to the mobile switching center 20, a control signal for outputting a guidance message via a voice to a telephone terminal, and a call processing unit interface function of activating the media control scenario 6 for recording and replaying a voice message of a user in response to a request from the call processing unit 1.
The media storing unit 5 includes a function of storing a voice message of the user. The voice message is stored in the media storing unit 5 in association with the telephone number of a telephone terminal of the user who is the destination, and the telephone number of the telephone terminal used for recording that message.

The media control scenario 6 is a group of programs activated by the media processing unit 4. The media control scenario 6 includes a program for recording the voice message of the user in the media recording unit 5, and a program for replaying the voice message stored in the media storing unit 5.

The following functions are realized by the programs in the media control scenario 6. That is, those are a message replaying function of replaying the voice message stored in the media storing unit 5, a recording accepting function of accepting a recording of a reply message to that message after the message is replayed, a replay call continuing function of recognizing switching of the content of a telephone call when a telephone call with the telephone terminal that is the recording source of the message, and of continuing the replaying process of the message, a PB receiving function of recognizing switching of the content of the telephone call when a PB (Push Button) signal sound (a PB signal) is received, and a billing-rate changing function of changing the billing rate relating to the billing process by the billing server 90.

The voice communication server apparatus 100 is connected to the mobile switching center 20 via a network. In this example, a C-plane (control plane) side (a control side) including the call processing unit 1 and a U-plane (User plane) side (a user side) including the media processing unit 4 are connected to the mobile switching center 20, respectively. In this example, the C-plane side has a protocol that is SIP (Session Initiation Protocol) and the U-plane side has a protocol that is RTP (Real-time Transport Protocol).

The mobile switching center 20 may have a billing termination function of terminating the billing process in response to an instruction from the voice communication server apparatus 100 or may have no billing termination function. When the mobile switching center 20 has the billing termination function, the mobile switching center 20 terminates the transmission of the billing source information generated by the mobile switching center 20 to the billing server 90 in response to an instruction transmitted from the voice communication server apparatus 100 or terminates the generation of the billing source information by the mobile switching center 20.

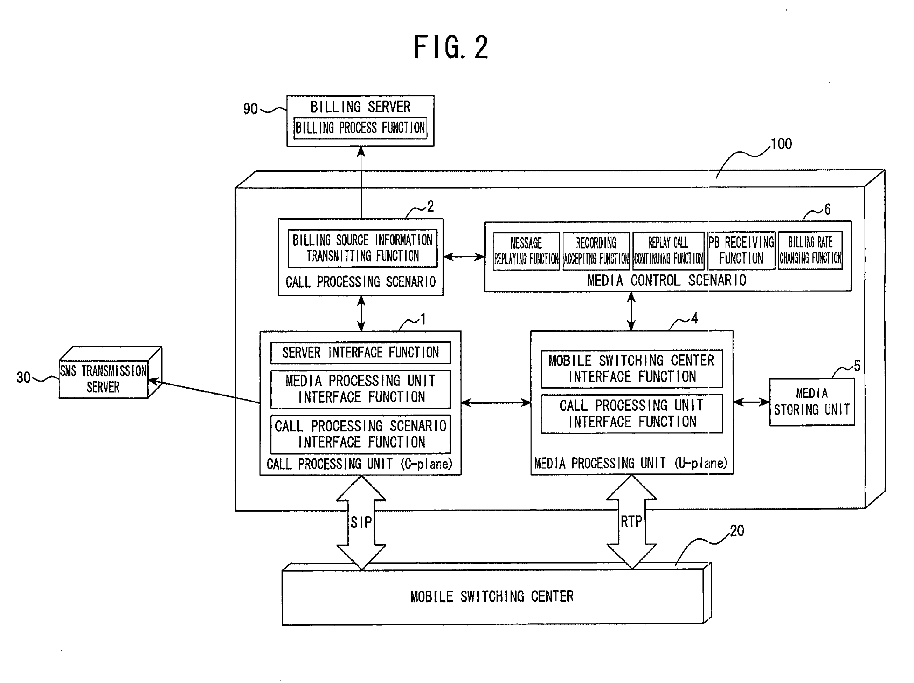

Conversely, as illustrated in FIG. 2, when the mobile switching center 20 does not have the billing termination function, the voice communication server apparatus 100 does not have a non-billing instructing function. When the mobile switching center 20 does not have the billing termination function, a billing process function in the billing server 90 performs an alternate process of the billing termination function. That is, in the billing process function in the billing server 90, an alternate process, such as of checking (check) the billing source information transmitted from the mobile switching center 20 with the billing source information transmitted from the voice communication server apparatus 100, and of performing no billing on the billing source information transmitted from the mobile switching center 20 is performed.

When the alternate process is performed by the billing process function in the billing server 90, it is necessary for the billing source information transmitting function of the voice communication server apparatus 100 that a unique ID which enables a checking of the billing source information output by the mobile switching center 20 with a call be included in the billing source information transmitted to the billing server 90.
When switching of the content of the telephone call is not detected in the voice communication server apparatus 100, the billing process function of the billing server 90 performs a billing process on the billing source information transmitted from the mobile switching center 20. Next, when switching of the content of the telephone call is detected in the voice communication server apparatus 100, the billing process function of the billing server 90 performs the billing process on the billing source information transmitted from the voice communication server apparatus 100 as explained above. That is, the billing process function of the billing server 90 performs the billing on only either one of the billing source information transmitted from the mobile switching center or the billing source information transmitted from the billing source information transmitting unit.

Meanwhile, the voice communication server apparatus 100 can be connected to an SMS (Short Message Service) transmission server 30 that is an external device through the function of the call processing unit 1.
The SMS transmission server 30 is a server that transmits a message through a conventionally well-known SMS. Transmission of a request for transmitting a message to the SMS transmission server 30 causes the SMS transmission server to transmit a message through the SMS. That is, by transmitting, from the call processing unit 1 to the SMS transmission server 30, a request for transmitting a message, a notification to the effect that a voice mail has been recorded can be made through an SMS message, or a notification to the effect that a voice mail has been replayed can be made through an SMS message.

The voice communication server apparatus may be configured as a device provided in a casing having the respective units collected therein, or may employ a configuration such that the respective units are provided in plural casings in a distributed manner. In the case of the configuration in which the respective units are provided in the plural casings in a distributed manner, the respective units may be connected via a network. When a voice mail service is realized over a mobile telephone network, the C-plane and the U-plane are often separated from each other. Hence, in this case, the above-explained call processing unit and media processing unit are often realized by physically different devices. In this manner, cases not only the respective units are realized by a single device but also the respective units are realized by plural devices and the respective devices are connected together via a network also correspond to the "voice communication server apparatus" of the present embodiment.

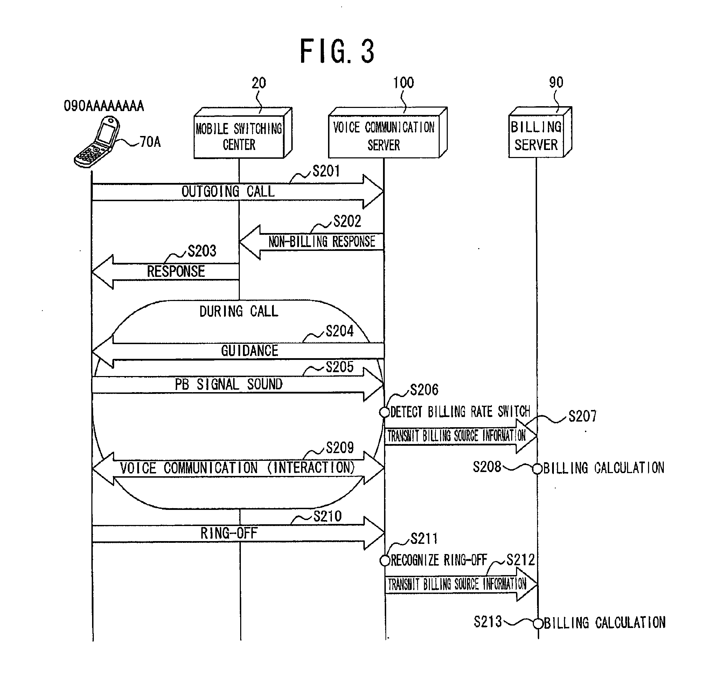

An explanation will now be given of an example operation of the voice communication server apparatus of the present embodiment with reference to FIG. 3. FIG. 3 is a sequence diagram illustrating a signal exchange between a telephone terminal 70A, the mobile switching center 20, the voice communication server apparatus 100, and the billing server 90. The explanation will be mainly given of processes of respective units when a message stored in the media storing unit 5 of the voice communication server apparatus 100 is replayed and a reply to that message is made (a reply message is recorded). The telephone terminal 70A has a telephone number of, for example, "090AAAAAAAA".

In FIG. 3, in a case in which a message is replayed through an operation given to the telephone terminal 70A, when an outgoing call is made from the telephone terminal 70A, a call signal is transmitted to the voice communication server apparatus 100 (step S201). The voice communication server apparatus 100 which has received the call signal transmits a non-billing response to the mobile switching center 20 (step S202). The mobile switching center 20 that has received the non-billing response signal does not perform the billing process. Accordingly, the mobile switching center 20 outputs no billing source information.

The mobile switching center 20 that has received the non-billing response signal transmits a response signal to the telephone terminal 70A (step S203). The call signal transmitted in the step S201 can be realized by, for example, an INVITE message of the SIP. The non-billing response signal transmitted in the step S202 and the response signal transmitted in the step S203 can be realized by, for example, 200 OK messages of the SIP.

After the above-explained processes, the telephone terminal 70A and the voice communication server apparatus 100 become a state communicating with each other. In this in-communication state, for example, the voice communication server apparatus 100 outputs a voice guidance to the telephone terminal 70A (step S204), and replaying or recording of a message is enabled through an operation given to the telephone terminal 70A in accordance with the content of the voice guidance.

In this example, an explanation will be given of a case in which the telephone terminal 70A is operated after the message is replayed with the call being connected, recording (replying) of a message is specified, and a PB signal sound corresponding to the recording process is output. When receiving the PB signal sound (step S205), the voice communication server apparatus 100 detects that the billing rate is switched (step S206), and transmits the billing source information to the billing server 90 (step S207). This billing source information is the billing source information relating to the replaying of the message by the telephone terminal 70A, and the billing server 90 performs the billing process based on this billing source information (step S208).

Thereafter, a message is recorded via a voice call (interaction) (step S209). When the recording of the message completes and the call is disconnected, the telephone terminal 70A transmits a ring-off signal to the voice communication server apparatus 100 (step S210). When receiving the ring-off signal, the voice communication server apparatus 100 recognizes ring-off (step S211), and transmits the billing source information to the billing server 90 (step S212). This billing source information is billing source information relating to the message recording by the telephone terminal 70A, and the billing server 90 performs the billing process based on this billing source information (step S213). The ring-off signal transmitted in the step S210 can be realized by, for example, a bye message of the SIP.

An explanation will be given of a case in which the recording of the message by the user of the telephone terminal 70A completes and it returns to the original situation, i.e., a replaying situation of the message. In this case, also, the telephone terminal 70A outputs a PB signal sound, and when the PB signal sound is input into the media processing unit 4, it can be recognized that the content of the telephone call is changed from the direct telephone-call state to the replaying state. That is, the PB receiving function enables a detection of switching from one state to another state between the replaying state of the voice message and the recording state of the voice message as switching of the content of the telephone call. Hence, the voice communication server apparatus 100 can transmit the billing source information to the billing server 90, and the billing server 90 can perform the billing process.

When, as explained with reference to FIG. 2, the mobile switching center does not have the billing termination function, the transmission of the non-billing response to the mobile switching center 20 (step S202) and the transmission of the response signal to the telephone terminal 70A (step S203) both illustrated in FIG. 3 are not performed. Next, the billing source information transmitted in the step S207 and the billing source information transmitted in the step S212 both illustrated in FIG. 3 include an ID (identification information) that can associate the billing source information transmitted from the mobile switching center 20 with the billing source information transmitted from the voice communication server apparatus 100.

The billing server 90 refers to this ID, and the billing server 90 does not perform the billing process when the mobile switching center 20 transmits thereto the billing source information (not illustrated), and the billing server 90 performs the billing process when the voice communication server apparatus 100 transmits thereto the billing source information. That is, in the case of FIG. 2 in which the mobile switching center does not have the billing termination function, the billing server 90 can perform the billing process based on the billing source information transmitted in the step S207 and the step S212, respectively.

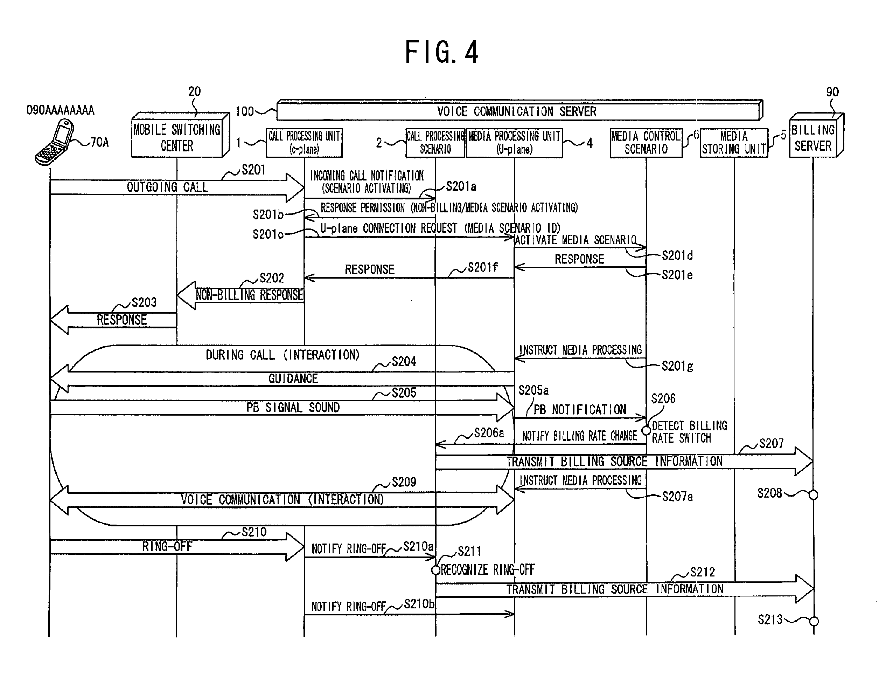

Next, an explanation will be given of a signal exchange between respective units in the voice communication server apparatus 100. FIG. 4 is a sequence diagram illustrating a signal exchange in the voice communication server apparatus 100 explained with reference to FIG. 3.
In FIG. 4, when a message is replayed through an operation given to the telephone terminal 70A, as the telephone terminal 70A makes an outgoing call, a call signal is transmitted to the voice communication server apparatus 100 (step S201). This call signal is received by the call processing unit 1 in the voice communication server apparatus 100. The call processing unit 1 transmits a call receiving notification to the call processing scenario 2 to activate the scenario (step S201a). This causes the call processing scenario 2 to output a response permission signal (step S201b), and the non-billing instructing function of the call processing unit 1 and the activation of the media scenario are instructed.

Accordingly, a connection request of the U-plane includeing the media scenario ID is output by the call processing unit 1 (step S201c), and the activation of the media control scenario 6 is instructed through the media processing unit 4 (step S201d). In response to the activation instruction, when the media control scenario 6 outputs a response signal, the response signal is received by the call processing unit 1 through the media processing unit 4 (steps S201e and S201f). Thereafter, the media control scenario 6 outputs a media process instruction to the media processing unit 4 (step S201g).

The call processing unit 1 that has received the response signal output by the media control scenario 6 transmits the non-billing response to the mobile switching center 20 through the non-billing instructing function (step S202). The mobile switching center 20 that has received this non-billing response signal does not perform the billing process. Accordingly, the mobile switching center 20 outputs no billing source information. The mobile switching center 20 that has received this non-billing response signal transmits the response signal to the telephone terminal 70A (step S203).

The call signal transmitted in the step S201 can be realized by, for example, the INVITE message of the SIP. The non-billing response signal transmitted in the step S202 and the response signal transmitted in the step S203 can be realized by, for example, the 200 OK message of the SIP.
Through the above-explained processes, the telephone terminal 70A and the voice communication server apparatus 100 become a communicating state therebetween. In the communicating state, the media processing unit 4 outputs a voice guidance to the telephone terminal 70A (step S204), and the message can be replayed or recorded by operating the telephone terminal 70A in accordance with the content of the voice guidance.

In this example, an explanation will be given of a case in which the telephone terminal 70A is operated while maintaining the call after a message is replayed to specify recording of a message (reply), and a PB signal sound corresponding to the recording process is output. When receiving the PB signal sound (step S205), the media processing unit 4 notifies the media control scenario 6 (step S205a). Hence, the media control scenario 6 detects that the billing rate is switched (step S206), and transmits a billing rate changing notification to the call processing scenario 2 (step S206a). In this case, the call processing scenario 2 transmits the billing source information to the billing server 90 (step S207). This billing source information is billing source information relating to the replaying of the message by the telephone terminal 70A, and the billing server 90 performs the billing process based on this billing source information (step S208).

Moreover, the media control scenario 6 outputs a media process instruction to the media processing unit 4 (step S207a).
Thereafter, a message recording via a voice call (interaction) is made (step S209). When the message recording completes and the call is disconnected, the telephone terminal 70A transmits a ring-off signal to the voice communication server apparatus 100 (step S210). When receiving the ring-off signal, the call processing unit 1 of the voice communication server apparatus 100 transmits a ring-off notification to the call processing scenario 2 and the media processing unit 4, respectively (steps S210a and S210b). Accordingly, the call processing scenario 2 recognizes a ring-off (step S211), and transmits the billing source information to the billing server 90 (step S212).

This billing source information is billing source information relating to the message recording by the telephone terminal 70A, and the billing server 90 performs the billing process based on this billing source information (step S213). The ring-off signal transmitted in the step S210 can be realized by, for example, the bye message of the SIP.

When the mobile switching center has not billing termination function explained with reference to FIG. 2, the transmission of the non-billing response to the mobile switching center 20 (step S202) and the transmission of the response signal to the telephone terminal 70A (step S203) both in FIG. 4 are not performed. The billing source information transmitted in the step S207 and the billing source information transmitted in the step S212 both in FIG. 4 include an ID (identification information) that can associate the billing source information transmitted from the mobile switching center 20 with the billing source information transmitted from the voice communication server apparatus 100.

The billing server 90 refers to this ID, and the billing server 90 does not perform the billing process when the billing source information is transmitted from the mobile switching center 20 (not illustrated), but the billing server 90 performs the billing process when the billing source information is transmitted from the voice communication server apparatus 100. That is, in the case of FIG. 2 in which the mobile switching center does not have the billing termination function, the billing server 90 is capable of performing the billing process based on the billing source information transmitted in the step S207 and the step S212, respectively.

### (Second Embodiment)

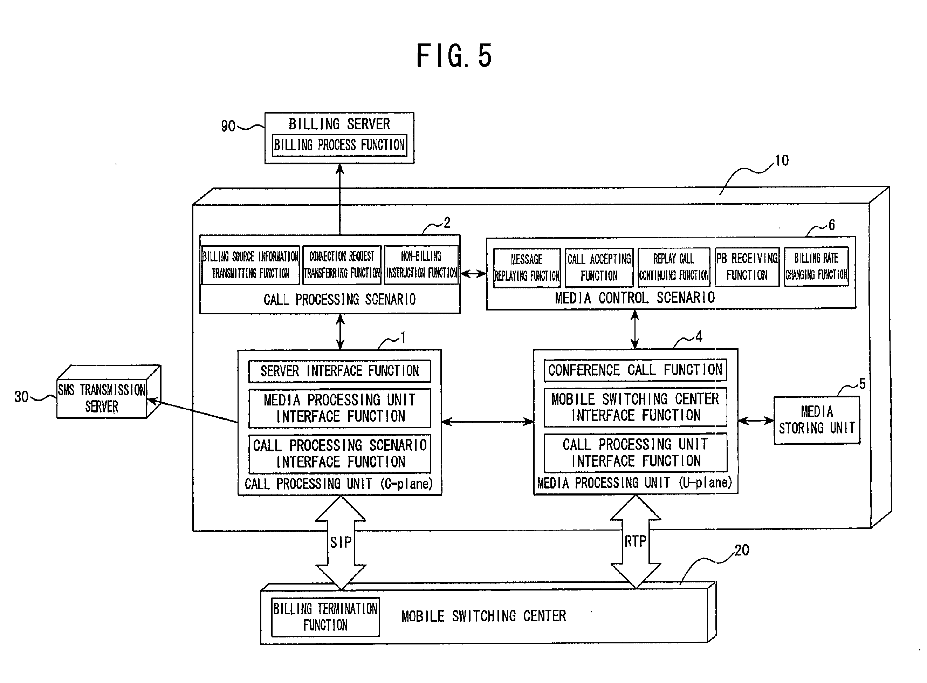

In the present embodiment, an explanation will be given of a case in which the voice communication server apparatus is a voice mail server apparatus, and an outgoing call directly to the telephone terminal that is the recording source is made after a message is replayed. The function of the voice mail server apparatus according to the present embodiment will be explained with reference to FIG. 5. With reference to FIG. 5, a voice mail server apparatus (hereinafter, also referred to as a VM server as needed) 10 of the present embodiment includes the call processing unit 1, the call processing scenario 2, the media processing unit 4, the media storing unit 5, and the media control scenario 6.

The call processing unit 1 includes a server interface function of realizing a signal exchange with an external device, a media processing unit interface function of notifying the media processing unit of a media control scenario activated when a guidance is output, and a call processing scenario interface function of activating a call processing scenario when receiving a connection request signal.
The call processing scenario 2 is a group of programs activated by the call processing scenario interface function of the call processing unit 1. The call processing scenario 2 includes a program for realizing a connection request transfer function of making an outgoing call to a message recording source , a program for realizing a billing source information transmitting function of transmitting billing source information to the billing server, and a program for realizing a non-billing instruction function that gives an instruction for terminating the billing process by the mobile switching center 20.

The media processing unit 4 includes a mobile switching center interface function of transmitting, to the mobile switching center 20, a control signal for outputting a guidance message via a voice to a telephone terminal, a call processing unit interface function of activating the media control scenario 6 to perform recording and replaying of a voice message by the user in response to a request from the call processing unit 1, and a conference function (Conference function) for mixing a first call from the telephone terminal to a local device with a second call from another telephone terminal to the local device to realize a telephone conference.

The media storing unit 5 includes a function of storing a voice message by the user. The voice message is stored in the media storing unit 5 in association with the telephone number of the telephone terminal of a designated user, and the telephone number of the telephone terminal used for recording the message.
The media control scenario 6 is a group of programs activated by the media processing unit 4. The media control scenario 6 includes, for example, a program for recording the voice message by the user in the media storing unit 5, and a program for replaying the voice message stored in the media storing unit 5.

The followings are functions realized by the programs in the media control scenario 6. That is, those are a message replaying function of replaying the voice message stored in the media storing unit 5, a telephone call accepting function of accepting a telephone call with the telephone terminal that is the source of the recorded message after the message is replayed, a replay call continuing function of recognizing switching of the content of the telephone call and continuing the replaying process of the message when a telephone call with the telephone terminal that is the source of the recorded message completes, a PB receiving function of recognizing the switching of the content of the telephone call when a PB signal is received, and a billing rate changing function of changing the billing rate on the billing process performed by the billing server 90.

The voice mail server apparatus 10 is connected with the mobile switching center 20 via a network. In this example, the C-plane side (the control side) including the call processing unit 1 and the U-plane side (the user side) including the media processing unit 4 are connected to the mobile switching center 20, respectively. In this example, the C-plane side has a protocol that is the SIP, and the U-plane side has a protocol that is the RTP.

The mobile switching center 20 may have a billing termination function of terminating the billing process in response to an instruction from the voice mail server apparatus 10, and have no billing termination function. When the mobile switching center 20 has the billing termination function, the mobile switching center 20 terminates the transmission of the billing source information generated by the mobile switching center 20 to the billing server 90 in response to the instruction transmitted from the VM server 10, or terminates the generation of the billing source information by the mobile switching center 20.

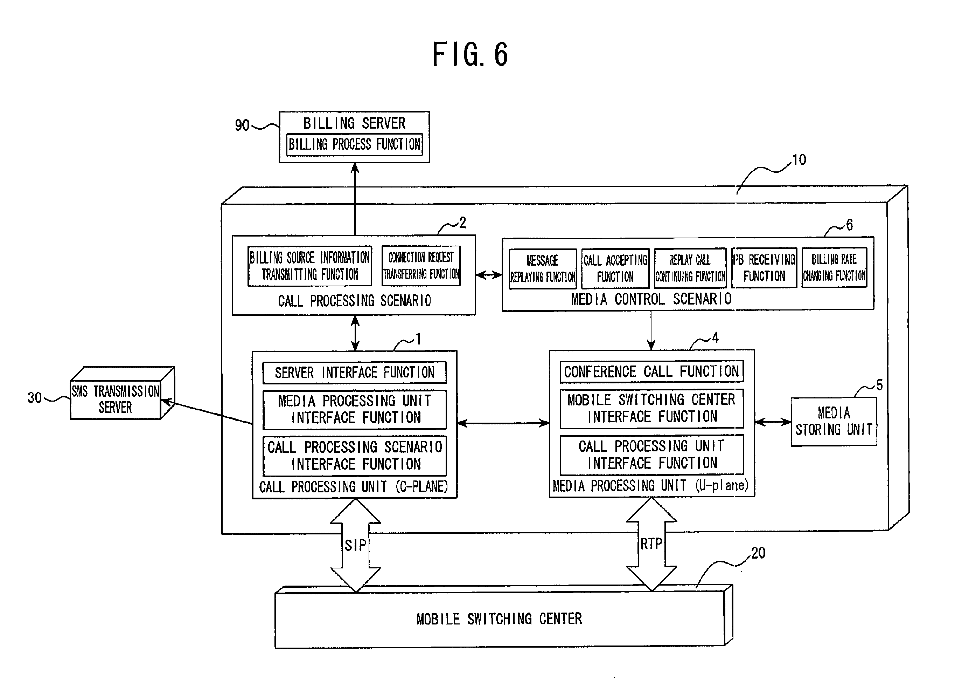

Conversely, as illustrated in FIG. 6, when the mobile switching center 20 does not have the billing termination function, the VM server 10 has no non-billing instruction function at all. When the mobile switching center 20 does not have the billing termination function, the billing process function in the billing server 90 performs an alternate process of the billing termination function. That is, in the billing process function in the billing server 90, an alternate process of checking (check) the billing source information transmitted from the mobile switching center 20 with the billing source information transmitted from the VM server 10, and of performing no billing process on the billing source information transmitted from the mobile switching center 20 is performed.

When the billing process function in the billing server 90 performs this alternate process, it is necessary that the billing source information transmitting function of the VM server 10 put a unique ID that enables a checking of the billing source information output from the mobile switching center 20 with a call in the billing source information transmitted to the billing server 90.
When switching of the content of the telephone call is not detected in the VM server 10, the billing process function of the billing server 90 performs the billing process on the billing source information transmitted from the mobile switching center 20. Next, when switching of the content of the telephone call is detected in the VM server 10, as explained above, the billing process function of the billing server 90 performs the billing process on the billing source information transmitted from the VM server 10. That is, the billing process function of the billing server 90 performs billing on only either one of the billing source information transmitted from the mobile switching center or the billing source information transmitted from the billing source information transmitting unit.

Meanwhile, the voice mail server apparatus 10 can be connected with the SMS transmission server 30 that is an external device through the function of the call processing unit 1.
The SMS transmission server 30 is a server that transmits a message via the conventionally well-known SMS. Transmission of a message transmission request to the SMS transmission server 30 causes the SMS transmission server to transmit a message via the SMS. That is, by transmitting a message transmission request from the call processing unit 1 to the SMS transmission server 30, a notification to the effect that a voice mail has been recorded can be made via an SMS message, or a notification to the effect that the voice mail has been replayed can be made via an SMS message.

The voice mail server apparatus may be a device having the respective units collected and provided in a single casing, or may have the respective units distributed and provided in multiple casings. In the case of the configuration in which the respective units are distributed and provided in the multiple casings, the respective units may be connected together via a network. When the voice mail service is realized over the mobile telephone network, the C-plane side and the U-plane side are often separated from each other, and thus the above-explained call processing unit and media processing unit are often realized physically by individual devices in this case. In this manner, cases not only the respective units are realized by a single device but also the respective units are realized by plural devices and the respective devices are connected together via a network correspond to the "voice mail server apparatus" of the present embodiment.

### (When Recording Source is Telephone Terminal of First Company Network)

A message recorded through the voice mail service is stored in the media storing unit 5. In the present embodiment, it is presumed that recording of the message can be carried out through an outgoing call made from the telephone terminal of the first company network or a telephone terminal of a second company network. In the present embodiment, moreover, it is presumed that an outgoing call can be made to the telephone terminal that is the message recording source after the message is replayed while the call for replaying the message is maintained to enable a direct telephone call.

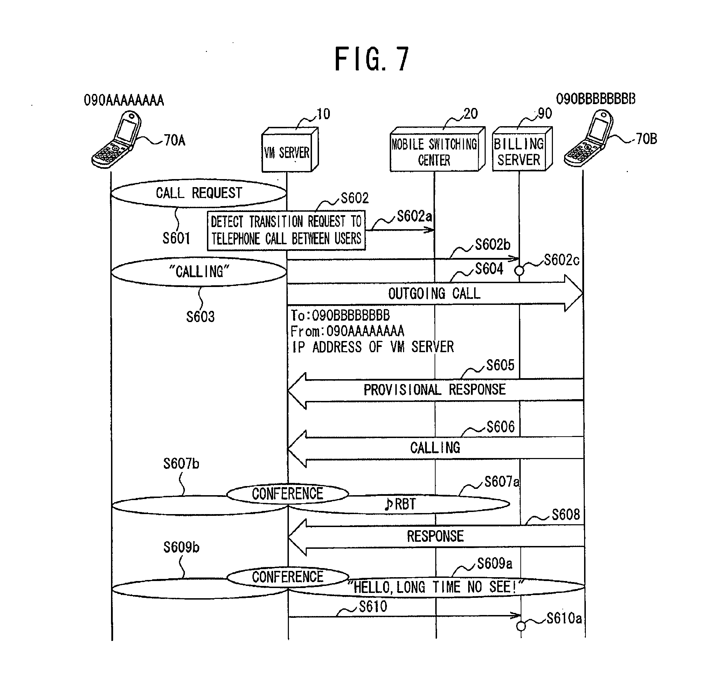

Respective explanations will be given of a case in which the message recording source is the telephone terminal of the first company network, and a case in which the message recording source is the telephone terminal of a second company network. When making a direct telephone call, an operation becomes different when a Conference function is utilized or when no Conference function is utilized. First, an explanation will be given of a process when the recording source of the replayed message is the telephone terminal of the first company network with reference to FIGS. 7 to 9.

FIG. 7 is a sequence diagram illustrating a process when the Conference function of the VM server 10 is utilized. In FIG. 7, when the telephone terminal 70A outputs a call request to the message recording source during the replaying of the message (step S601), the VM server 10 detects that a transition to a telephone call between the users is requested (i.e., a direct telephone call is requested) (step S602).

In this case, the VM server 10 recognizes that the billing rate is switched, and instructs the mobile switching center 20 to terminate the billing process (step S602a). Moreover, the VM server 10 transmits billing source information to the billing server 90 (step S602b). This billing source information is billing source information relating to the replaying of the message by the telephone terminal 70A, and the billing server 90 performs the billing process based on this billing source information (step S602c).

Moreover, the VM server 10 outputs a voice guidance to the telephone terminal 70A (step S603). An example voice guidance is "Now calling".
Thereafter, the VM server 10 transmits a call signal to a telephone terminal 70B (step S604). This call signal can be realized by, for example, the INVITE message of the SIP. The call signal transmitted in the step S604 includes, as the call destination "To", the telephone number "090BBBBBBBB" of the telephone terminal 70B that is the call destination. Moreover, the call signal transmitted in the step S604 includes, as the call-originating terminal "From", the telephone number "090AAAAAAAA" of the telephone terminal 70A. Furthermore, the call signal transmitted in the step S604 is added with the SDP (the IP address of the U-plane connection destination) of the VM server 10 of the D company.

The telephone terminal 70B that has received the call signal via the mobile switching center 20 first transmits a provisional response message (step S605). The provisional response message is received by the VM server 10 of the D company via the mobile switching center 20. The provisional response message transmitted in the step S605 can be realized by, for example, the 183 message of the SIP.
Thereafter, the telephone terminal 70B transmits a calling signal indicating calling (step S606). This calling message can be realized by, for example, the 180 message of the SIP.

The calling message is received by the VM server 10 of the D company via the mobile switching center 20. This causes the VM server 10 to mix the ring back tone (Ring Back Tone, hereinafter, referred to as an RBT) with the voice of the call between the telephone terminal 70A and the VM server 10 (steps S607a and S607b) by the Conference function. Accordingly, the RBT can be output to the telephone terminal 70A, and thus the user of the telephone terminal 70A can recognize that (the user of) the telephone terminal 70B is called out. Note that the RBT can be output by the mobile switching center 20 or a server apparatus, not illustrated.

Subsequently, the telephone terminal 70B transmits a response message (step S608). This response message is transmitted to the VM server 10 of the D company. The response message transmitted in the step S608 can be realized by, for example, the 200 OK message of the SIP.
After the above-explained processes, a call is established between the telephone terminal 70B and the VM server 10 over the D company carrier network (step S609a), and the voice of this call and the voice of the call (step S609b) continued between the telephone terminal 70A that is the call-originating terminal and the VM server 10 over the D company carrier network are mixed by the Conference function of the VM server 10 of the D company. The Conference function can realize a voice call between the telephone terminal 70A and the telephone terminal 70B. The user of the telephone terminal 70A and the user of the telephone terminal 70B can enjoy a conversation like "Hello, long time no see!".

Thereafter, when the conversation between the user of the telephone terminal 70A and the user of the telephone terminal 70B ends and the call is disconnected, the VM server 10 transmits billing source information to the billing server 90 (step S610). This billing source information is billing source information relating to the direct telephone call with the telephone terminal 70B based on the outgoing call made from the telephone terminal 70A, and the billing server 90 performs the billing process based on this billing source information (step S610a).

In the processes explained above with reference to FIG. 7, while the call is maintained, the billing rate relating to the replaying of the message by the telephone terminal 70A and the billing rate relating to the direct telephone call between the telephone terminal 70A and the telephone terminal 70B can be changed. Accordingly, the same billing process as that of the case in which once the call is disconnected after a message is replayed and an outgoing call is made for a direct telephone call can be performed, enabling the provision of the equalized service.

When the mobile switching center does not have the billing termination function explained with reference to FIG. 6, the billing process termination instruction (step S602a) to the mobile switching center 20 in FIG. 7 is not performed. The billing source information transmitted in the step S602b and the billing source information transmitted in the step S610 both in FIG. 7 include an ID (identification information) that can associate the billing source information transmitted from the mobile switching center 20 with the billing source information transmitted from the VM server 10.

The billing server 90 refers to this ID, and the billing server 90 does not perform the billing process when the billing source information is transmitted from the mobile switching center 20 (not illustrated) but the billing server 90 performs the billing process when the billing source information is transmitted from the VM server 10. That is, in the case of FIG. 6 in which the mobile switching center does not have the billing termination function, the billing server 90 can perform the billing process based on the billing source information transmitted in the step S602b and the step S610, respectively.

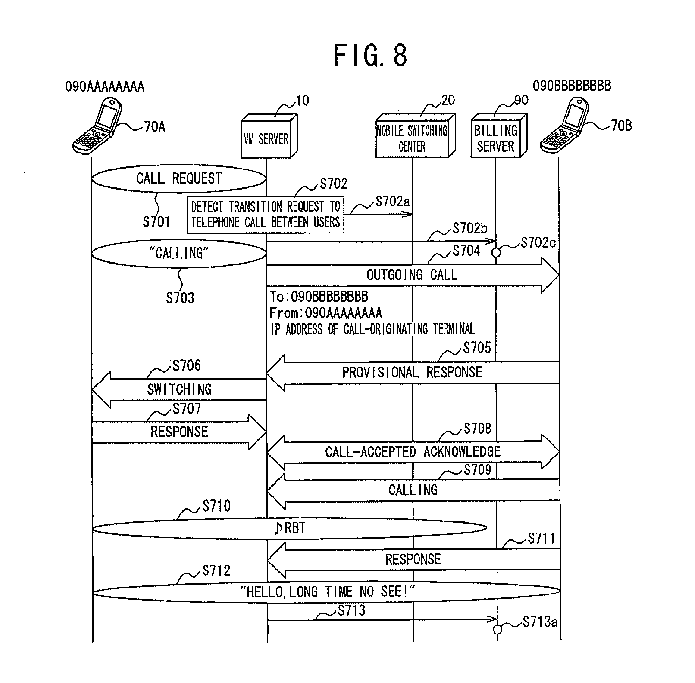

Next, FIG. 8 is a sequence diagram illustrating a process when no Conference function of the VM server 10 is utilized. In FIG. 8, when the telephone terminal 70A outputs a call request to the message recording source while the message is being replayed (step S701), the VM server 10 detects that a transition to a telephone call between the users is requested (i.e., a direct telephone call is requested) (step S702).

In this case, the VM server 10 recognizes that the billing rate is switched, and instructs the mobile switching center 20 to terminate the billing process (step S702a). Moreover, the VM server 10 transmits billing source information to the billing server 90 (step S702b). This billing source information is billing source information relating to the replaying of the message by the telephone terminal 70A, and the billing server 90 performs the billing process based on this billing source information (step S702c).

The VM server 10 outputs a voice guidance to the telephone terminal 70A (step S703). An example voice guidance is "Now calling".
Thereafter, the VM server 10 transmits a call signal to the telephone terminal 70B (step S704). This call signal can be realized by, for example, the INVITE message of the SIP. The call signal transmitted in the step S704 includes, as the call destination "To", the telephone number "090BBBBBBBB" of the telephone terminal 70B that is the call destination. Moreover, the call signal transmitted in the step S704 includes, as the call-originating terminal "From", the telephone number "090AAAAAAAA" of the telephone terminal 70A. Furthermore, the call signal transmitted in the step S704 is added with the SDP (the IP address of the U-plane connection destination) of the VM server 10 of the D company.

The telephone terminal 70B that has received the call signal via the mobile switching center 20 first transmits a provisional response message (step S705). The provisional response message is received by the VM server 10 of the D company via the mobile switching center 20. The provisional response message transmitted in the step S705 can be realized by, for example, the 183 message of the SIP.
The VM server 10 of the D company that has received the provisional response message in the step S705 transmits a switch signal to the telephone terminal 70A (step S706). The telephone terminal 70A that has received the switch signal transmits a response signal (step S707). The switch signal transmitted in the step S706 can be realized by, for example, the Re-INVITE message of the SIP. The response signal transmitted in the step S707 can be realized by, for example, the 200 OK message of the SIP.

The provisional response message transmitted in the step S705 is a response message needing an accepted acknowledge, and a accepted acknowledge message is exchanged between the telephone terminal 70 and the VM server 10 of the D company (step S708).
Thereafter, the telephone terminal 70B transmits a calling signal indicating calling (step S709). The calling signal can be realized by, for example, the 180 message of the SIP.

The calling message is received by the VM server 10 of the D company via the mobile switching center 20. This causes the VM server to output an RBT to the telephone terminal 70A (step S710). Hence, the user of the telephone terminal 70A can recognize that (the user of) the telephone terminal 70B is called out. Note that the RBT can be output by the mobile switching center 20 or a server apparatus, not illustrated.
Thereafter, the telephone terminal 70B transmits a response message (step S711). This response message is transmitted to the VM server 10 of the D company. The response message transmitted in the step S711 can be realized by, for example, the 200 OK message of the SIP.

After the above-explained processes, a call is established between the telephone terminal 70A and the telephone terminal 70B (step S712). Establishment of the call enables a voice call between the telephone terminal 70A and the telephone terminal 70B. The user of the telephone terminal 70A and the user of the telephone terminal 70B can enjoy a conversation like "Hello, long time no see!".
Thereafter, when the conversation between the user of the telephone terminal 70A and the user of the telephone terminal 70B ends and the call is disconnected, the VM server 10 transmits billing source information to the billing server 90 (step S713). This billing source information is billing source information relating to the direct telephone call with the telephone terminal 70B based on the outgoing call made from the telephone terminal 70A, and the billing server 90 performs the billing process based on this billing source information (step S713a).

In the processes explained above with reference to FIG. 8, while the call is maintained, the billing rate relating to the replaying of the message by the telephone terminal 70A and the billing rate relating to the direct telephone call between the telephone terminal 70A and the telephone terminal 70B can be changed. Accordingly, the same billing process as that of the case in which once the call is disconnected after a message is replayed and an outgoing call is made for a direct telephone call can be performed, enabling the provision of the equalized service.

When the mobile switching center does not have the billing termination function explained with reference to FIG. 6, the billing process termination instruction (step S702a) to the mobile switching center 20 in FIG. 8 is not performed. The billing source information transmitted in the step S702b and the billing source information transmitted in the step S713 both in FIG. 8 include an ID (identification information) that can associate the billing source information transmitted from the mobile switching center 20 with the billing source information transmitted from the VM server 10.

The billing server 90 refers to this ID, and the billing server 90 does not perform the billing process when the billing source information is transmitted from the mobile switching center 20 (not illustrated) but the billing server 90 performs the billing process when the billing source information is transmitted from the VM server 10. That is, in the case of FIG. 6 in which the mobile switching center does not have the billing termination function, the billing server 90 can perform the billing process based on the billing source information transmitted in the step S702b and the step S713, respectively.

Next, an explanation will be given of a signal exchange between respective units in the VM server 10.

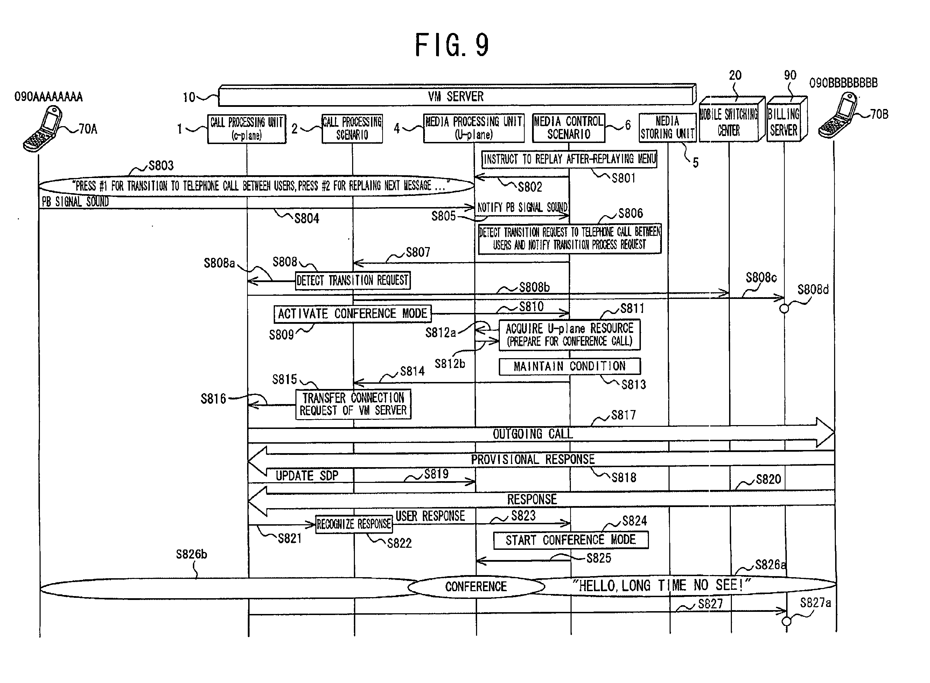

FIG. 9 is a sequence diagram illustrating a signal exchange in the VM server 10 when the Conference function explained with reference to FIG. 7 is utilized. In FIG. 9, the media control scenario 6 outputs an instruction of replaying a menu after the replaying (step S801). This replay instruction is input in the media processing unit 4 (step S802).
This causes the media processing unit 4 to output a menu guidance via a voice to the telephone terminal 70A (step S803). An example menu guidance is "press #1 for a transition to a telephone call between users, press #2 for replaying next message, ..., etc.".

When the user hearing this guidance message presses a button of the telephone terminal 70A, a PB signal sound is input in the media processing unit 4 (step S804). An explanation will be given of a case in which "#1" is pressed and a corresponding PB signal sound is input in the media processing unit 4. The media processing unit 4 notifies the media control scenario 6 of the input PB signal sound (step S805). This notification allows the media control scenario 6 to detect a transition request to a telephone call between the users, and notifies the call processing scenario 2 (steps S806 and S807).

This notification is received by the call processing scenario 2 (step S808), and a termination of the billing process is instructed to the mobile switching center 20 via the call processing unit 1 (steps S808a and S808b). Moreover, the VM server 10 transmits the billing source information to the billing server 90 (step S808c). The billing source information is billing source information relating to the replaying of the message by the telephone terminal 70A, and the billing server 90 performs the billing process based on this billing source information (step S808d).

The call processing scenario 2 activates the conference mode (conference mode) by the Conference function (step S809). When the activation signal of the conference mode is transmitted to the media control scenario 6 (step S810), the media control scenario 6 performs a process of ensuring a U-plane resource for the conference (steps S811, S812a, and S812b). Next, when it returns to the message replaying after the telephone call between the users ends, the media control scenario 6 maintains the current replaying state (step S813). When, for example, the replaying completes up to the third message currently, the replaying state of that third message is maintained.

After the media control scenario 6 maintains the current replaying state, the call processing scenario 2 outputs an instruction of transferring a connection request to the VM server 10 to the call processing unit 1 (steps S814, S815, and S816).
The call processing unit 1 transmits a call signal to the telephone terminal 70B via the mobile switching center 20 (step S817). The call signal can be realized by, for example, the INVITE message of the SIP. Thereafter, the call processing unit 1 receives the provisional response message via the mobile switching center 20 (step S818). The provisional response message transmitted in the step S818 can be realized by, for example, the 183 message of the SIP. The call processing unit 1 that has received the provisional response message performs an updating process through the SDP on the media processing unit 4 in order to start a real-time communication (step S819).

Thereafter, the call processing unit 1 receives the response message via the mobile switching center 20 (step S820). The response message transmitted in the step S820 can be realized by, for example, the 200 OK message of the SIP. The call processing unit 1 that has received the response message notifies the call processing scenario 2 of the reception (step S821). Hence, the call processing scenario 2 recognizes that the telephone terminal 70B has responded (step S822), and notifies the media control scenario 6 of the user response (step S823. The media control scenario 6 that has received this notification instructs the media processing unit 4 to start the conference mode (steps S824 and S825).

Subsequently, a call is established between the telephone terminal 70B and the VM server 10 over the D company carrier network (step S826a), and the Conference function of the media processing unit 4 mixes the voice of this call with the voice of the call (step S826b) continuous between the telephone terminal 70A that is a call-originating terminal and the VM server 10 over the D company carrier network. This conference function enables a voice call between the telephone terminal 70A and the telephone terminal 70B. The user of the telephone terminal 70A and the user of the telephone terminal 70B can enjoy a conversation like "Hello, long time no see!".

Thereafter, when the conversation between the user of the telephone terminal 70A and the user of the telephone terminal 70B ends and the call is disconnected, the VM server 10 transmits billing source information to the billing server 90 (step S827). This billing source information is billing source information relating to a direct telephone call with the telephone terminal 70B based on the outgoing call made from the telephone terminal 70A, and the billing server 90 performs the billing process based on this billing source information (step S827a).

An explanation will now be given of a case in which the conversation between the user of the telephone terminal 70A and the user of the telephone terminal 70B ends and it returns to the original state, i.e., the replaying state of the message. In this case, also, when a PB signal sound is output by the telephone terminal 70A, and input in the media processing unit 4, it becomes possible to recognize that the content of the telephone call is changed from the direct telephone call state to the replaying state. That is, the PB receiving function enables a detection of a change from one state to another state between the replaying state of the message and a call state by an outgoing call made to the recording source terminal of the voice message as switching of the content of the telephone call. Hence, the VM server 10 can transmit the billing source information to the billing server 90, and the billing server 90 can perform the billing process.

In the processes explained above with reference to FIG. 9, while the call is maintained, the billing rate relating to the replaying of the message by the telephone terminal 70A and the billing rate relating to the direct telephone call between the telephone terminal 70A and the telephone terminal 70B can be changed. Accordingly, the same billing process as that of the case in which once the call is disconnected after a message is replayed and an outgoing call is made for a direct telephone call can be performed, enabling the provision of the equalized service.

When the mobile switching center does not have the billing termination function explained with reference to FIG. 6, the billing process termination instruction (steps S808a, S808b) to the mobile switching center 20 in FIG. 9 is not performed. The billing source information transmitted in the step S808c and the billing source information transmitted in the step S827 both in FIG. 9 include an ID (identification information) that can associate the billing source information transmitted from the mobile switching center 20 with the billing source information transmitted from the VM server 10.

The billing server 90 refers to this ID, and the billing server 90 does not perform the billing process when the billing source information is transmitted from the mobile switching center 20 (not illustrated) but the billing server 90 performs the billing process when the billing source information is transmitted from the VM server 10. That is, in the case of FIG. 6 in which the mobile switching center does not have the billing termination function, the billing server 90 can perform the billing process based on the billing source information transmitted in the step S808c and the step S827, respectively.

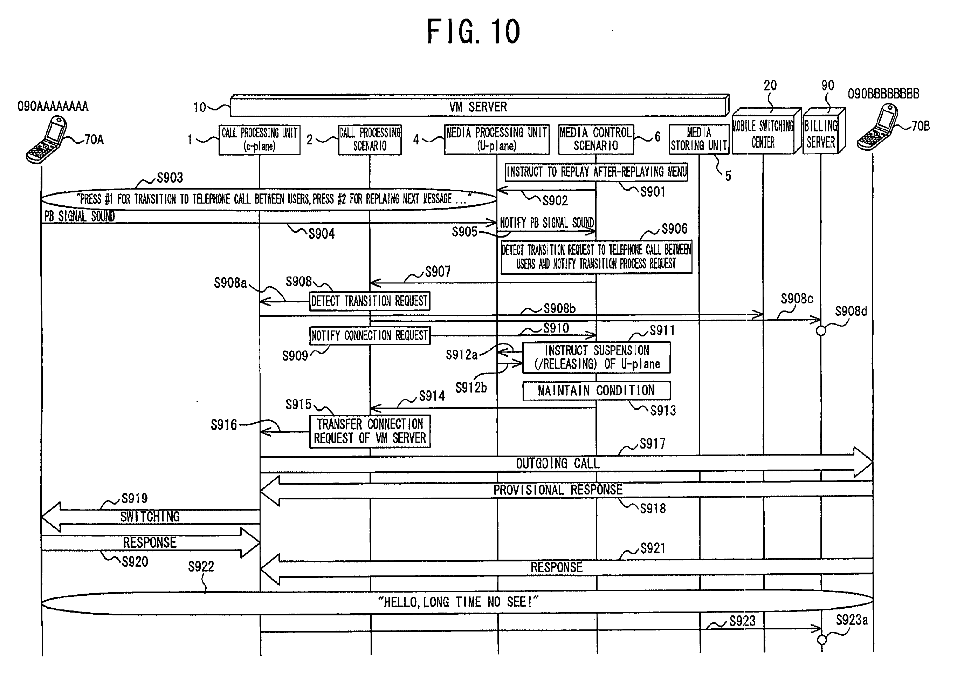

FIG. 10 is a sequence diagram illustrating a signal exchange in the VM server 10 when no Conference function explained with reference to FIG. 8 is utilized. In FIG. 10, the media control scenario 6 outputs an instruction of replaying a menu after the replaying (step S901). This replay instruction is input in the media processing unit 4 (step S902).
This causes the media processing unit 4 to output a menu guidance via a voice to the telephone terminal 70A (step S903). An example menu guidance is "press #1 for a transition to a telephone call between users, press #2 for replaying next message, ..., etc.".

When the user hearing this guidance message presses a button of the telephone terminal 70A, a PB signal sound is input in the media processing unit 4 (step S904). An explanation will be given of a case in which "#1" is pressed and a corresponding PB signal sound is input in the media processing unit 4.
The media processing unit 4 notifies the media control scenario 6 of the input PB signal sound (step S905). This notification allows the media control scenario 6 to detect a transition request to a telephone call between the users, and notifies the call processing scenario 2 (steps S906 and S907). This notification is received by the call processing scenario 2 (step S908), and a termination of the billing process is instructed to the mobile switching center 20 via the call processing unit 1 (steps S908a and S908b). Moreover, the VM server 10 transmits the billing source information to the billing server 90 (step S908c). The billing source information is billing source information relating to the replaying of the message by the telephone terminal 70A, and the billing server 90 performs the billing process based on this billing source information (step S908d).

The call processing scenario 2 notifies the media control scenario 6 of the connection request to the telephone terminal 70B (step S909). When a notification signal of this connection request is transmitted to the media control scenario 6 (step S910), the media control scenario 6 instructs the media processing unit 4 to suspend (release) the U-plane (steps S911, S912a, and S912b). Next, when it returns to the replaying of the message after the telephone call between the users, the media control scenario 6 maintains the current replaying state (step 5913). For example, when the replaying of the message currently completes up to the third message, the replaying state of that third message is maintained.

After the media control scenario 6 maintains the current replaying state, the call processing scenario 2 outputs, to the call processing unit 1, an instruction of transferring the connection request to the VM server 10 (steps S914, S915, and S916).
The call processing unit 1 transmits a call signal to the telephone terminal 70B via the mobile switching center 20 (step S917). The call signal can be realized by, for example, the INVITE message of the SIP. Thereafter, the call processing unit 1 receives the provisional response message via the mobile switching center 20 (step S918). The provisional response message transmitted in the step S918 can be realized by, for example, the 183 message of the SIP.

The call processing unit 1 that has received the provisional response message in the step S918 transmits a switch signal to the telephone terminal 70A (step S919). The telephone terminal 70A that has received this switch signal transmits a response signal (step S920). The switch signal transmitted in the step S919 can be realized by, for example, the Re-INVITE message of the SIP. The response signal transmitted in the step S920 can be realized by, for example, the 200 OK message of the SIP.

Thereafter, the telephone terminal 70B transmits a response message, and the call processing unit 1 receives that response message via the mobile switching center 20 (step S921). This response message can be realized by, for example, the 200 OK message of the SIP.
After the processes explained above, a call is established between the telephone terminal 70A and the telephone terminal 70B (step S922). The establishment of this call can realize a voice call between the telephone terminal 70A and the telephone terminal 70B. The user of the telephone terminal 70A and the user of the telephone terminal 70B can enjoy therebetween a conversation like "Hello, long time no see!".

Thereafter, when the conversation between the user of the telephone terminal 70A and the user of the telephone terminal 70B ends and the call is disconnected, the VM server 10 transmits billing source information to the billing server 90 (step S923). This billing source information is billing source information relating to a direct telephone call with the telephone terminal 70B based on the outgoing call made from the telephone terminal 70A, and the billing server 90 performs the billing process based on this billing source information (step S923a).

An explanation will now be given of a case in which the conversation between the user of the telephone terminal 70A and the user of the telephone terminal 70B ends and it returns to the original state, i.e., the replaying state of the message. In this case, also, when a PB signal sound is output by the telephone terminal 70A, and input in the media processing unit 4, it becomes possible to recognize that the content of the telephone call is changed from the direct telephone call state to the replaying state. That is, the PB receiving function enables a detection of switching from one state to another state between the replaying state of the voice message and a call state by an outgoing call made to the recording source terminal of the voice message as a change in the content of the telephone call. Hence, the VM server 10 can transmit the billing source information to the billing server 90, and the billing server 90 can perform the billing process.

In the processes explained above with reference to FIG. 10, while the call is maintained, the billing rate relating to the replaying of the message by the telephone terminal 70A and the billing rate relating to the direct telephone call between the telephone terminal 70A and the telephone terminal 70B can be changed. Accordingly, the same billing process as that of the case in which once the call is disconnected after a message is replayed and an outgoing call is made for a direct telephone call can be performed, enabling the provision of the equalized service.

When the mobile switching center does not have the billing termination function explained with reference to FIG. 6, the billing process termination instruction (steps S908a, S908b) to the mobile switching center 20 in FIG. 10 is not performed. The billing source information transmitted in the step S908c and the billing source information transmitted in the step S923 both in FIG. 10 include an ID (identification information) that can associate the billing source information transmitted from the mobile switching center 20 with the billing source information transmitted from the VM server 10.

The billing server 90 refers to this ID, and the billing server 90 does not perform the billing process when the billing source information is transmitted from the mobile switching center 20 (not illustrated) but the billing server 90 performs the billing process when the billing source information is transmitted from the VM server 10. That is, in the case of FIG. 6 in which the mobile switching center does not have the billing termination function, the billing server 90 can perform the billing process based on the billing source information transmitted in the step S908c and the step S923, respectively.

### (When Recording Source is Telephone Terminal over Another Carrier Network)

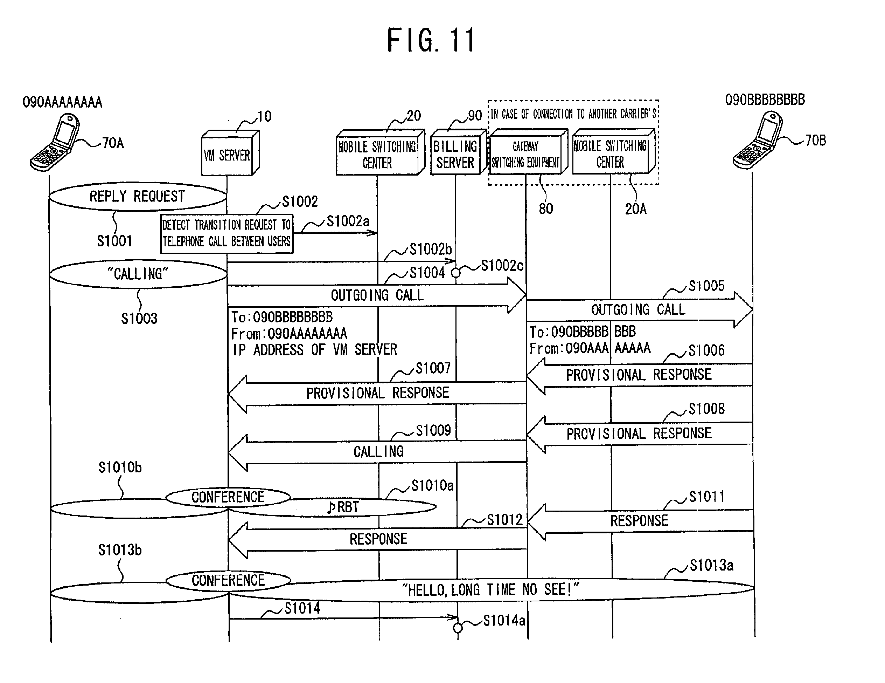

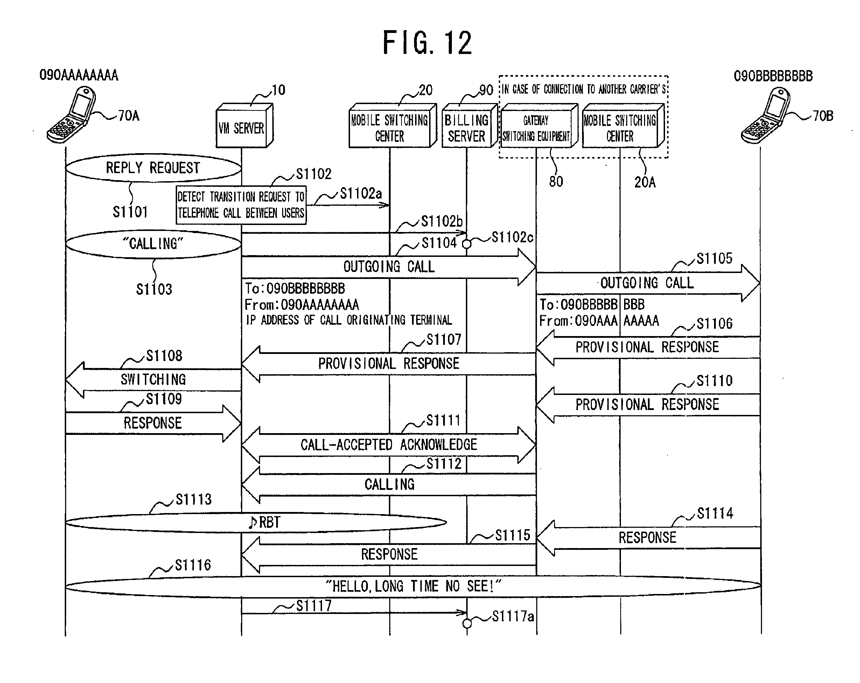

When the recording source of the replayed message is a telephone terminal over another carrier network, an outgoing call is to be made to the telephone terminal over another carrier network via a gateway switch. An explanation will now be given of processes in this case with reference to FIG. 11 and FIG. 12.
FIG. 11 is a sequence diagram illustrating a process when the Conference function of the VM server 10 is utilized. In FIG. 11, when the telephone terminal 70A outputs a call request to the recording source of the message while replaying the message (step S1001), the VM server 10 detects that a transition to the telephone call between the users is requested (i.e., a direct telephone call is requested) (step S1002).

In this case, the VM server 10 recognizes that the billing rate is switched, and instructs the mobile switching center 20 to terminate the billing process (step S1002a). Moreover, the VM server 10 transmits billing source information to the billing server 90 (step S1002b). This billing source information is billing source information relating to the replaying of the message by the telephone terminal 70A, and the billing server 90 performs the billing process based on this billing source information (step S1002c).

Moreover, the VM server 10 outputs a voice guidance to the telephone terminal 70A (step S1003). An example voice guidance is "Now calling".
Thereafter, the VM server 10 transmits a call signal to the telephone terminal 70B (step S1004). This call signal can be realized by, for example, the INVITE message of the SIP. The call signal transmitted in the step S1004 includes, as the call destination "To", the telephone number "090BBBBBBBB" of the telephone terminal 70B that is the call destination. Moreover, the call signal transmitted in the step S1004 includes, as the call-originating terminal "From", the telephone number "090AAAAAAAA" of the telephone terminal 70A. Furthermore, the call signal transmitted in the step S1004 is added with the SDP (the IP address of the U-plane connection destination) of the VM server 10 of the D company.

A gateway switch 80 that has received the call signal transmits the call signal to the telephone terminal 70A via the mobile switching center 20 over another carrier network (e.g., A company carrier network) (step S1005). The call signal transmitted in the step S1005 includes, as the call destination "To", the telephone number "090BBBBBBBB" of the telephone terminal 70A that is the call destination. Moreover, the call signal transmitted in the step S1005 includes, as the call-originating terminal "From", "090AAAAAAAA". The call signal transmitted in this step S1005 can be realized by, for example, the IAM (Initial Address Message) message of the ISUP (ISDN User Part).

The telephone terminal 70B that has received the call signal via the mobile switching center 20 first transmits a provisional response message (step S1006). This provisional response message is transmitted to the gateway switch 80 via a mobile switching center 20A. Moreover, this provisional response message is transmitted to the VM server 10 over the D company carrier network via the gateway switch 80 (step S1007). The call signal transmitted in the step S1006 can be realized by, for example, the ACM (Address Complete Message) message of the ISUP. Moreover, the call signal transmitted in the step S1007 can be realized by, for example, the 183 message of the SIP.

Next, the telephone terminal 70B transmits a provisional response message (step S1008). This provisional response message is transmitted to the gateway switch 80 via the mobile switching center 20A. The gateway switch 80 transmits a calling message indicating calling (step S1009). The provisional response message transmitted in the step S1008 can be realized by, for example, the CPG (Call Progress) message of the ISUP. The calling message transmitted in the step S1009 can be realized by, for example, the 180 message of the SIP.

The calling message is received by the VM server 10 of the D company via the mobile switching center 20. This causes the VM server 10 to mix an RBT with the voice of the call between the telephone terminal 70A and the VM server 10 through the Conference function (steps S1010a, S1010b). Accordingly, the RBT can be output to the telephone terminal 70A, and thus the user of the telephone terminal 70A can recognize that (the user of) the telephone terminal 70B is called out. Note that the RBT can be output by the mobile switching center 20 or a server apparatus, not illustrated.

Thereafter, the telephone terminal 70B transmits a response message (step S1011). This response message is received by the VM server 10 of the D company via the mobile switching center 20 (step S1012). The response message transmitted in the step S1011 can be realized by, for example, the ANM (Answer Message) message of the ISUP. The response message transmitted in the step S1012 can be realized by, for example, the 200 OK message of the SIP.

After the above-explained processes, a call is established between the telephone terminal 70B and the VM server 10 over the D company carrier network (step S1013a), and the voice of this call and the voice of the call (step S1013b) continuous between the telephone terminal 70A that is the call-originating terminal and the VM server 10 over the D company carrier network are mixed by the Conference function of the VM server 10 of the D company. This Conference function realizes a voice call between the telephone terminal 70A and the telephone terminal 70B. The user of the telephone terminal 70A and the user of the telephone terminal 70B can enjoy a conversation like "Hello, long time no see"".

Thereafter, when the conversation between the user of the telephone terminal 70A and the user of the telephone terminal 70B ends and the call is disconnected, the VM server 10 transmits billing source information to the billing server 90 (step S1014). This billing source information is billing source information relating to a direct telephone call with the telephone terminal 70B based on the outgoing call made from the telephone terminal 70A, and the billing server 90 performs the billing process based on this billing source information (step S1014a).

An explanation will now be given of a case in which the conversation between the user of the telephone terminal 70A and the user of the telephone terminal 70B ends and it returns to the original state, i.e., the replaying state of the message. In this case, also, when a PB signal sound is output by the telephone terminal 70A, and input in the media processing unit 4, it becomes possible to recognize that the content of the telephone call is changed from the direct telephone call state to the replaying state. That is, the PB receiving function enables a detection of a change from one state to another state between the replaying state of the voice message and a call state by an outgoing call made to the recording source of the voice message as switching of the content of the telephone call. Hence, the VM server 10 can transmit the billing source information to the billing server 90, and the billing server 90 can perform the billing process.

In the processes explained above with reference to FIG. 11, while the call is maintained, the billing rate relating to the replaying of the message by the telephone terminal 70A and the billing rate relating to the direct telephone call between the telephone terminal 70A and the telephone terminal 70B can be changed. Accordingly, the same billing process as that of the case in which once the call is disconnected after a message is replayed and an outgoing call is made for a direct telephone call can be performed, enabling the provision of the equalized service.

When the mobile switching center does not have the billing termination function explained with reference to FIG. 6, the billing process termination instruction (step S1002a) to the mobile switching center 20 in FIG. 11 is not performed. The billing source information transmitted in the step S1002b and the billing source information transmitted in the step S1014 both in FIG. 11 include an ID (identification information) that can associate the billing source information transmitted from the mobile switching center 20 with the billing source information transmitted from the VM server 10.

The billing server 90 refers to this ID, and the billing server 90 does not perform the billing process when the billing source information is transmitted from the mobile switching center 20 (not illustrated) but the billing server 90 performs the billing process when the billing source information is transmitted from the VM server 10. That is, in the case of FIG. 6 in which the mobile switching center does not have the billing termination function, the billing server 90 can perform the billing process based on the billing source information transmitted in the step S1002b and the step S1014, respectively.

FIG. 12 is a sequence diagram illustrating a process when no Conference function of the VM server 10 is utilized. In FIG. 12, when the telephone terminal 70A outputs a call request to the recording source of the message while replaying the message (step S1101), the VM server 10 detects that a transition to the telephone call between the users is requested (i.e., a direct telephone call is requested) (step S1102). In this case, the VM server 10 recognizes that the billing rate is switched, and instructs the mobile switching center 20 to terminate the billing process (step S1102a). Moreover, the VM server 10 transmits billing source information to the billing server 90 (step S1102b). This billing source information is billing source information relating to the replaying of the message by the telephone terminal 70A, and the billing server 90 performs the billing process based on this billing source information (step S1102c).

Moreover, the VM server 10 outputs a voice guidance to the telephone terminal 70A (step S1103). An example voice guidance is "Now calling".
Thereafter, the VM server 10 transmits a call signal to the telephone terminal 70B (step S1104). This call signal can be realized by, for example, the INVITE message of the SIP. The call signal transmitted in the step S1104 includes, as the call destination "To", the telephone number "090BBBBBBBB" of the telephone terminal 70B that is the call destination. Moreover, the call signal transmitted in the step S1104 includes, as the call-originating terminal "From", the telephone number "090AAAAAAAA" of the telephone terminal 70A. Furthermore, the call signal transmitted in the step S1104 is added with the SDP (the IP address of the U-plane connection destination) of the VM server 10 of the D company.

The gateway switch 80 that has received the call signal transmits the call signal to the telephone terminal 70A via the mobile switching center 20A over the A company carrier network (step S1105). The call signal transmitted in the step S1105 includes, as the call destination "To", the telephone number "090BBBBBBBB" of the telephone terminal 70A that is the call destination. Moreover, the call signal transmitted in the step S1105 includes, as the call-originating terminal "From", "090AAAAAAAA". The call signal transmitted in this step S1105 can be realized by, for example, the IAM message of the ISUP.

The telephone terminal 70B that has received the call signal via the mobile switching center 20 first transmits a provisional response message (step S1106). This provisional response message is transmitted to the gateway switch 80 via the mobile switching center 20A. Moreover, this provisional response message is received by the VM server 10 over the D company carrier network via the gateway switch 80 (step S1107). The call signal transmitted in the step S1106 can be realized by, for example, the ACM message of the ISUP. Moreover, the call signal transmitted in the step S1107 can be realized by, for example, the 183 message of the SIP.

The VM server 10 of the D company that has received the provisional response message in the step S1107 transmits a switch signal to the telephone terminal 70A (step S1108). The telephone terminal 70A that has received the switch signal transmits a response signal (step S1109). The switch signal transmitted in the step S1108 can be realized by, for example, the Re-INVITE message of the SIP. The response signal transmitted in the step S1109 can be realized by, for example, the 200 OK message of the SIP.

Next, the telephone terminal 70B transmits a provisional response message (step S1110). This provisional response message is transmitted to the gateway switch 80 via the mobile switching center 20A. The gateway switch 80 transmits a calling message indicating calling (step S1112). The provisional response message transmitted in the step S1110 can be realized by, for example, the CPG message of the ISUP. The calling message transmitted in the step S1112 can be realized by, for example, the 180 message of the SIP.

The provisional response message transmitted in the step S1107 is a response message needing an accepted acknowledge, and the gateway switch 80 and the VM server 10 of the D company exchanges the accepted acknowledge therebetween (step S1111).
The calling message transmitted in the step S1112 is received by the VM server 10 of the D company via the mobile switching center 20. In this case, an RBT is output to the telephone terminal 70A (step S1113). Accordingly, the user of the telephone terminal 70A can recognize that (the user of) the telephone terminal 70B is called out. Note that the RBT can be output by the mobile switching center 20 or a server apparatus, not illustrated.

Thereafter, the telephone terminal 70B transmits a response message (step S1114). This response message is transmitted to the VM server 10 of the D company (step S1115). The response message transmitted in the step S1114 can be realized by, for example, the ANM message of the ISUP. The response message transmitted in the step S1115 can be realized by, for example, the 200 OK message of the SIP.

After the above-explained processes, a call is established between the telephone terminal 70A and the telephone terminal 70B (step S1116). Establishment of the call can realize a voice call between the telephone terminal 70A and the telephone terminal 70B. The user of the telephone terminal 70A and the user of the telephone terminal 70B can enjoy a conversation like "Hello, long time no see!".
Thereafter, when the conversation between the user of the telephone terminal 70A and the user of the telephone terminal 70B ends and the call is disconnected, the VM server 10 transmits billing source information to the billing server 90 (step S1117). This billing source information is billing source information relating to a direct telephone call with the telephone terminal 70B based on the outgoing call made from the telephone terminal 70A, and the billing server 90 performs the billing process based on this billing source information (step S1117a).

An explanation will now be given of a case in which the conversation between the user of the telephone terminal 70A and the user of the telephone terminal 70B ends and it returns to the original state, i.e., the replaying state of the message. In this case, also, when a PB signal sound is output by the telephone terminal 70A, and input in the media processing unit 4 of the VM server 10, it becomes possible to recognize that the content of the telephone call is changed from the direct telephone call state to the replaying state. That is, the PB receiving function enables a detection of switching from one state to another state between the replaying state of the voice message and a call state by an outgoing call made to the recording source of the voice message as a change in the content of the telephone call. Hence, the VM server 10 can transmit the billing source information to the billing server 90, and the billing server 90 can perform the billing process.

In the processes explained above with reference to FIG. 12, while the call is maintained, the billing rate relating to the replaying of the message by the telephone terminal 70A and the billing rate relating to the direct telephone call between the telephone terminal 70A and the telephone terminal 70B can be changed. Accordingly, the same billing process as that of the case in which once the call is disconnected after a message is replayed and an outgoing call is made for a direct telephone call can be performed, enabling the provision of the equalized service.

When the mobile switching center does not have the billing termination function explained with reference to FIG. 6, the billing process termination instruction (step S1102a) to the mobile switching center 20 in FIG. 12 is not performed. The billing source information transmitted in the step S1102b and the billing source information transmitted in the step S1117 both in FIG. 12 include an ID (identification information) that can associate the billing source information transmitted from the mobile switching center 20 with the billing source information transmitted from the VM server 10.

The billing server 90 refers to this ID, and the billing server 90 does not perform the billing process when the billing source information is transmitted from the mobile switching center 20 (not illustrated) but the billing server 90 performs the billing process when the billing source information is transmitted from the VM server 10. That is, in the case of FIG. 6 in which the mobile switching center does not have the billing termination function, the billing server 90 can perform the billing process based on the billing source information transmitted in the step S1102b and the step S1117, respectively.

### (Third Embodiment)

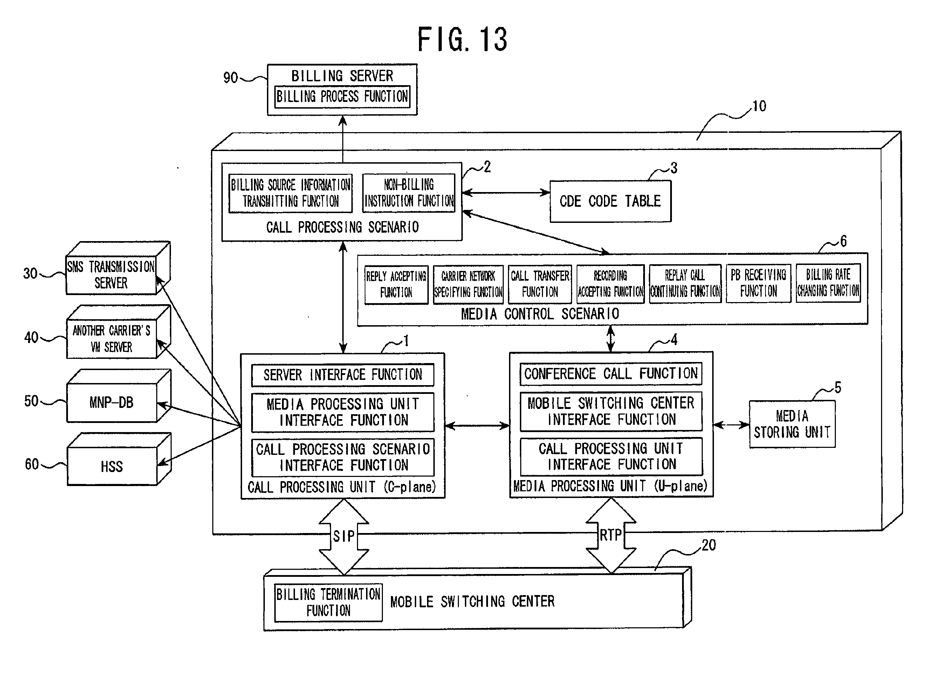

In the present embodiment, an explanation will be given of a case in which the voice communication server apparatus is a voice mail server apparatus, and a message is recorded in the voice mail server apparatus of another carrier network from a first-company carrier network. A function of the voice mail server apparatus of the present embodiment will be explained with reference to FIG. 13. With reference to FIG. 13, a voice mail server apparatus 10 of the present embodiment includes the call processing unit 1, the call processing scenario 2, a CDE code table 3, the media processing unit 4, the media storing unit 5, and the media control scenario 6.

The call processing unit 1 includes a server interface function of realizing a signal exchange with an external device, a media processing unit interface function of notifying the media processing unit of the media control scenario activated when a guidance is output, and a call processing scenario interface function of activating the call processing scenario when receiving a call signal (i.e., when receiving a call), and of transmitting a notification of an MNP destination (a port-out destination).

The call processing scenario 2 is a group of programs activated by the call processing scenario interface function of the call processing unit 1. The call processing scenario 2 includes a program of accessing the CDE code table 3 and of specifying a communication carrier network based on telephone number digits, a program of instructing the carrier network (a connection destination carrier network) of the transfer destination, a program of receiving a notification of the MNP destination, a program of transmitting a connection instruction to the MNP destination, a program of activating the media control scenario when a voice guidance is output, a program of realizing a billing source information transmitting function that transmits billing source information to the billing server, and a program of realizing a non-billing instruction function that instructs termination of the billing process by the mobile switching center 20.

The CDE code table 3 is a table indicating an association of a CDE code that is specific digits (upper three digits) of a telephone number with a carrier network defined by the CDE code, and is provided for specifying a carrier based on telephone number digits. When the call processing scenario 2 refers to the CDE code table 3 for the CDE code of a telephone number of a mobile telephone terminal which is a call destination and included in a call signal, a carrier network can be specified.

When, however, a contract is shifted to a contract with another carrier company with the aid of the system of mobile telephone number portability (MNP), it is difficult to completely specify the current carrier of the mobile telephone terminal that is a call destination even if the CDE table 3 is referred. That is, there is a possibility that a port out has been made from a carrier that can be identified by checking the telephone number digits with another carrier, and thus it is unable to completely specify the current carrier by only referring to the CDE code table 3.

The media processing unit 4 includes a mobile switching center interface function of transmitting, to the mobile switching center 20, a control signal for outputting a guidance message via a voice to a mobile telephone terminal, a call processing unit interface function of activating the media control scenario 6 to perform recording and replaying of a voice message by the user in response to a request from the call processing unit 1, and a conference function (Conference function) for mixing a call from the mobile telephone terminal to a local device with a call from another voice mail server apparatus to the local device to realize a telephone conference.

The media storing unit 5 includes a function of storing a voice message by the user.
The media control scenario 6 is a group of programs activated by the media processing unit 4. The media control scenario 6 includes a program for recording the voice message by the user in the media storing unit 5, and a program for replaying the voice message stored in the media storing unit 5.

The followings are the functions realized by the programs in the media control scenario 6. That is, those are a reply accepting function of accepting a reply to the message recording source while replaying the message, a carrier network specifying function of specifying the carrier network of the destination of the reply to that message, a call transferring function of transferring a call from the mobile telephone terminal to the local device to another voice mail server apparatus, a recording accepting function of accepting a recording of a message when there is a call from another voice mail server apparatus to the local device is transferred, a replay call continuing function of recognizing switching of the content of the telephone call when a reply to the massage completes and of continuing the replaying process of the message, a PB receiving function of recognizing switching of the content of the telephone call when a PB signal is received, and a billing rate changing function of changing the billing rate relating to the billing process performed by the billing server 90.

The voice mail server apparatus 10 is connected with the mobile switching center 20 via a network. In this example, the C-plane side (the control side) including the call processing unit 1 and the U-plane side (the user side) including the media processing unit 4 are connected to the mobile switching center 20, respectively. In this example, the C-plane side has a protocol that is the SIP, and the U-plane side has a protocol that is the RTP. The mobile switching center 20 may have a billing termination function of terminating the billing process in response to an instruction from the VM server 10, and have no billing termination function. When the mobile switching center 20 has the billing termination function, the mobile switching center 20 terminates the transmission of the billing source information generated by the mobile switching center 20 to the billing server 90 in response to the instruction transmitted from the VM server 10, or terminates the generation of the billing source information by the mobile switching center 20.

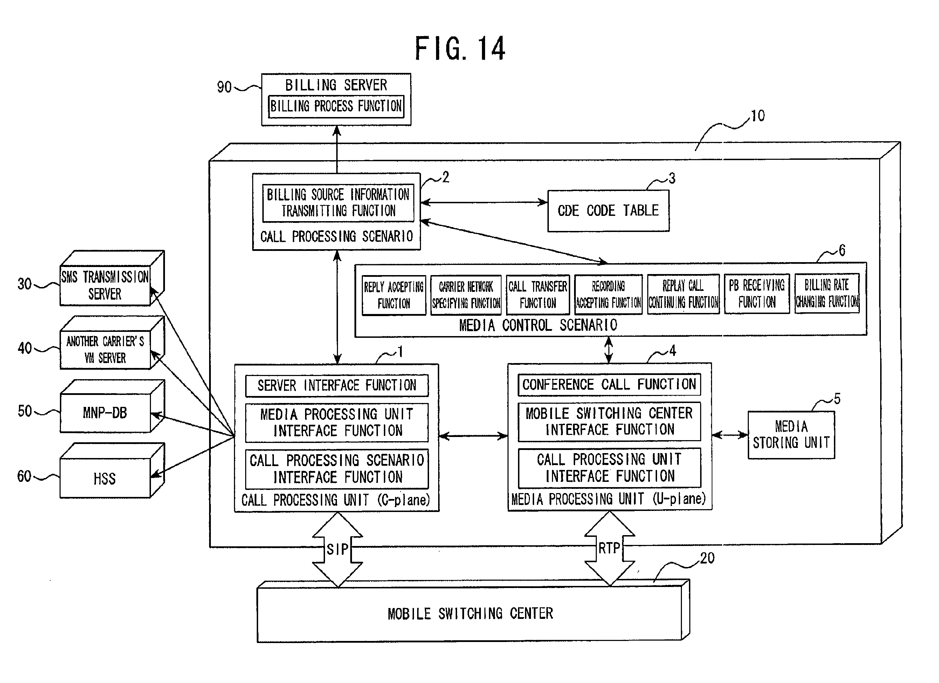

Conversely, as illustrated in FIG. 14, when the mobile switching center 20 does not have the billing termination function, the VM server 10 has no non-billing instruction function at all. When the mobile switching center 20 does not have the billing termination function, the billing process function in the billing server 90 performs an alternate process of the billing termination function. That is, in the billing process function in the billing server 90, an alternate process of checking (check) the billing source information transmitted from the mobile switching center 20 with the billing source information transmitted from the VM server 10, and of performing no billing process on the billing source information transmitted from the mobile switching center 20 is performed. When the billing process function in the billing server 90 performs this alternate process, it is necessary that the billing source information transmitting function of the VM server 10 put a unique ID that enables a checking of the billing source information output by the mobile switching center 20 with a call in the billing source information transmitted to the billing server 90.

When switching of the content of the telephone call is not detected in the VM server 10, the billing process function of the billing server 90 performs the billing process on the billing source information transmitted from the mobile switching center 20. Next, when switching of the content of the telephone call is detected in the VM server 10, as explained above, the billing process function of the billing server 90 performs the billing process on the billing source information transmitted from the VM server 10. That is, the billing process function of the billing server 90 performs billing on only either one of the billing source information transmitted from the mobile switching center or the billing source information transmitted from the billing source information transmitting unit.

Meanwhile, the voice mail server apparatus 10 can be connected with the SMS transmission server 30, a voice mail server apparatus 40 over another company carrier network, an MNP-DB (Database) 50, and an HSS (Home Subscriber Server) 60 that are external devices through the function of the call processing unit 1.
The SMS transmission server 30 is a server that transmits a message via the conventionally well-known SMS. Transmission of a message transmission request to the SMS transmission server 30 causes the SMS transmission server to transmit a message via the SMS. That is, by transmitting a message transmission request from the call processing unit 1 to the SMS transmission server 30, a notification to the effect that a voice mail has been recorded can be made via an SMS message, or a notification to the effect that the voice mail has been replayed can be made via an SMS message.

The voice mail server apparatus 40 over another company carrier network is a voice mail server apparatus (hereinafter, also referred to as a VM server accordingly) provided over another company carrier network managed by a second company. When the call processing unit 1 transmits a call signal, this call signal is input in the VM server 40 of the another company carrier network via a gateway switch and a mobile switching center provided over another company carrier network. In this example, a call signal regenerated through a redirect response is also input in the VM server 40 over another company carrier network via the gateway switch and the mobile switching center provided over another company carrier network.

The MNP-DB 50 is a database indicating an association of a telephone number with a carrier network to which this telephone number was subjected to port-out by MNP. By checking this MNP-DB 50 for a given telephone number, it becomes possible to specify a carrier network to which the telephone number was subjected to port-out. In this example, the call processing unit 1 refers to this MNP-DB 50 for a telephone number included in a call signal, thereby specifying a carrier network subjected to the port-out of that telephone number.
The HSS 60 is a server managing user profile information. By referring to this HSS 60 in this example, it becomes possible for the call processing unit 1 to obtain user profile information upon accessing to the HSS 60.

The voice mail server apparatus may be a device having the respective units collected and provided in a single casing, or may have the respective units distributed and provided in multiple casings. In the case of the configuration in which the respective units are distributed and provided in the multiple casings, the respective units may be connected together via a network. When the voice mail service is realized over the mobile telephone network, the C-plane side and the U-plane side are often separated from each other, and thus the above-explained call processing unit and media processing unit are often realized physically by individual devices in this case. In this manner, cases not only the respective units are realized by a single device but also the respective units are realized by plural devices and the respective devices are connected together via a network correspond to the "voice mail server apparatus" of the present embodiment.

An explanation will be given below of a signal exchanged between respective devices in the case of making a reply during the replaying process. When a reply is made while a message is being replayed, the operation differs when the Conference function is utilized or when no Conference function is utilized.
(When Conference Function is Utilized)

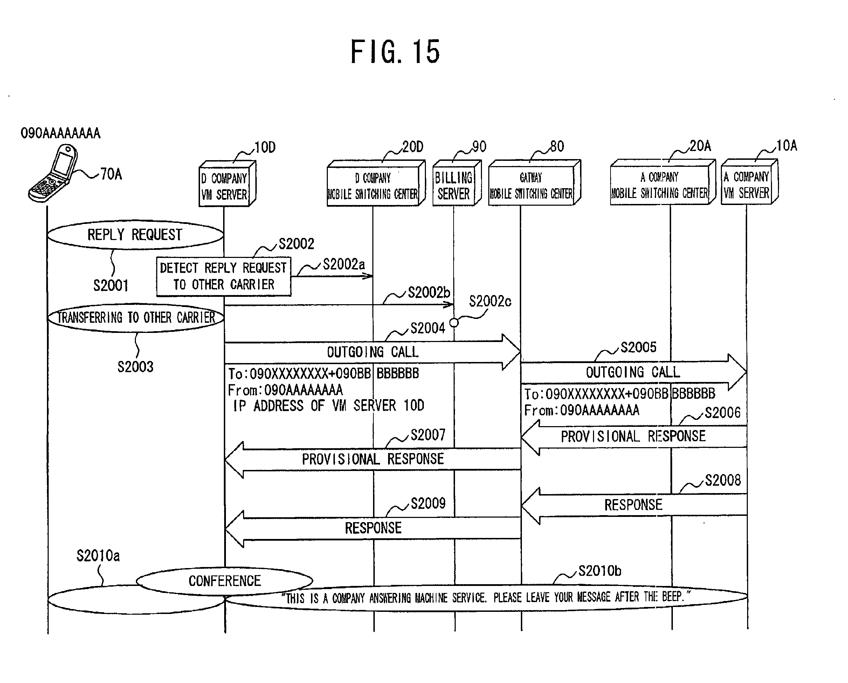

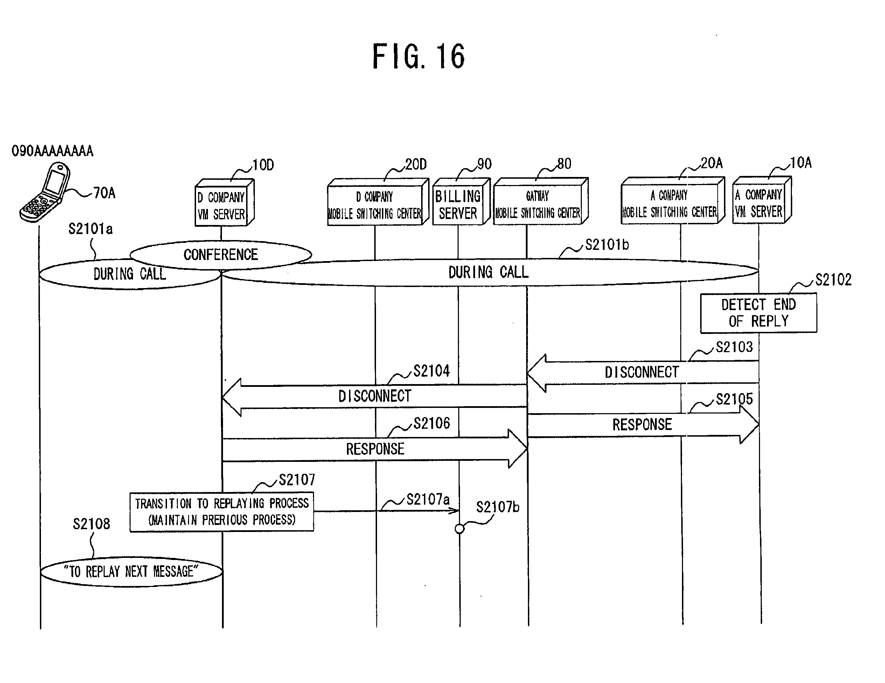

FIG. 15 and FIG. 16 illustrate signals exchanged between the respective devices when a reply is made through the Conference function of the VM server 10D of the D company while a message is being replayed.

In FIG. 15, the mobile telephone terminal 70A which is replaying a message transmits, to a VM server 10D, a reply request to that message (step S2001). The VM server 10D of the D company that has received the reply request detects that a reply request to another carrier network has been output by the mobile telephone terminal 70A (step S2002). In this case, the VM server 10D of the D company recognizes that the billing rate is switched, and instructs the mobile switching center 20 to terminate the billing process (step S2002a). Moreover, the VM server 10 transmits billing source information to the billing server 90 (step S2002b). This billing source information is billing source information relating to the replaying of the message by the telephone terminal 70A, and the billing server 90 performs the billing process based on this billing source information (step S2002c).

In order to output a guidance message to the effect that a call is transferred to another carrier network, the VM server 10D transmits, to the mobile telephone terminal 70A, a provisional response (not illustrated) indicating that the VM server 10D is calling out. This provisional response can be realized by, for example, the 183 message of the SIP. This guidance message is the same as the conventionally well-known ring-back tone, and is a voice only in the downstream direction. An example guidance message here is "we are transferring to another carrier" (step S2003).

Thereafter, the VM server 10D transmits a call signal to the carrier network determined in the step S2002 (step S2004). This call signal can be realized by, for example, the INVITE message of the SIP.
The call signal transmitted in the step S2004 includes, as the call destination "To", the telephone number "090XXXXXXXX + 090BBBBBBBB" that is the telephone number of the call-destination mobile telephone terminal having the telephone number of the VM server of the A company carrier network added to the header. Moreover, the call signal transmitted in the step S2004 includes, as the call-originating terminal "From", the telephone number "090AAAAAAAA". Furthermore, the call signal transmitted in the step S2004 is added with the SDP (the IP address of the U-plane connection destination) of the VM server 10D of the D company.

The gateway switch 80 that has received the call signal transmits the call signal to a VM server 10A over the A company carrier network (step S2005). The call signal transmitted in the step S2005 includes, as the call destination "To", "090XXXXXXXX + 090BBBBBBBB" that is the telephone number of the call-destination mobile telephone terminal 70A having the telephone number of the VM server added to the header. Moreover, the call signal transmitted in the step S2005 includes, as the call-originating terminal "From", "090AAAAAAAA". The call signal transmitted in this step S2005 can be realized by, for example, the IAM message of the ISUP.

The VM server 10A over the A company carrier network which has received the call signal first transmits a provisional response message (step S2006). This provisional response message is received by the VM server 10D over the D company carrier network via the gateway switch 80 (step S2007).
The provisional response message transmitted in the step S2006 can be realized by, for example, the ACM/CPG (Address Complete Message/Call Progress) message of the ISUP. Moreover, the provisional response message transmitted in the step S2007 can be realized by, for example, the 183 message of the SIP.

Thereafter, the VM server 10A over the A company carrier network transmits a response message (step S2008). This response message is transmitted to the VM server 10D of the D company via the gateway switch 80 (step S2009). The response message transmitted in the step S2008 can be realized by, for example, the ANM message of the SIP. The response message transmitted in the step S2009 can be realized by, for example, the 200 OK message of the SIP.

After the above-explained processes, a call is established between the VM server 10A over the A company carrier network and the VM server 10D over the D company carrier network (step S2010b), and the voice of this call and the voice of the call (step S2010a) continuous between the mobile telephone terminal 70A that is the call-originating terminal and the VM server 10D over the D company carrier network are mixed by the Conference function of the VM server 10D of the D company. This Conference function realizes a recording of a reply message from the mobile telephone terminal 70A to the VM server 10A over the A company carrier network. At this time, it is typical that the VM server 10A over the A company carrier network outputs a guidance relating to the VM service. An example guidance message is "This is A company answering machine center. Please leave your message after the beep".

Turning now to FIG. 16, and in a state in which the voice of the call between the mobile telephone terminal 70A that is a call-originating terminal and the VM server 10D over the D company carrier network and the voice of the call between the VM server 10A over the A company carrier network and the VM server 10D over the D company carrier network (steps S2101a, S2101b), the VM server 10A of the A company detects a termination of the recording of the reply message (step S2102). This causes the VM server 10A of the A company to transmit a disconnecting signal (step S2103), and this disconnecting signal is received by the VM server 10D of the D company via the gateway switch 80 (step S2104). The disconnecting signal transmitted in the step S2103 can be realized by, for example, the REL (Release) message of the ISUP. Moreover, the disconnecting signal transmitted in the step S2104 can be realized by, for example, the Bye message of the SIP.

In response to the disconnecting signal transmitted in the step S2103, the gateway switch 80 transmits a disconnection response signal (step S2105). The disconnection response signal transmitted in the step S2105 can be realized by, for example, the RLC (Release Complete) message of the ISUP. In response to the response signal transmitted in the step S2104, the VM server 10D of the D company transmits a response signal (step S2106). The response signal transmitted in the step S2106 can be realized by, for example, the 200 OK (Bye) message of the SIP.

Thereafter, the replay call continuing function of the VM server 10D of the D company recognizes switching of the content of the call, and the process progresses to a replaying process (step S2107). This causes the VM server 10D to recognize that the billing rate is switched, and to transmit billing source information to the billing server 90 (step S2107a). This billing source information is billing source information relating to a direct telephone call with the telephone terminal 70B based on an outgoing call made from the telephone terminal 70A, and the billing server 90 performs the billing process based on this billing source information (step S2107b). Subsequently, the previous replaying process is continued.

That is, a change from one state to another state between the replaying state of the voice message and the recording state of the voice message to another VM server corresponding to the recording source terminal of the voice message can be detected as the switching of the content of the telephone call. This enables the VM server 10 to transmit the billing source information to the billing server 90, and the billing server 90 can perform the billing process.

It is typical that in order to let the user of the mobile telephone terminal 70A to know that the replaying process is continued, a guidance to that effect is output. An example guidance message is "next message is replayed" (step S2108).
Thereafter, when the replaying process by the telephone terminal 70A ends and the call is disconnected, the VM server 10D transmits billing source information to the billing server 90, and the billing server 90 performs the billing process based on this billing source information (not illustrated).

When the mobile switching center does not have the billing termination function explained with reference to FIG. 14, the billing process termination instruction (step S2002a) to the mobile switching center 20 in FIG. 15 is not performed. The billing source information transmitted in the step S2002b in FIG. 15 and the billing source information transmitted in the step S2107a in FIG. 16 include an ID (identification information) that can associate the billing source information transmitted from the mobile switching center 20 with the billing source information transmitted from the VM server 10.

The billing server 90 refers to this ID, and the billing server 90 does not perform the billing process when the billing source information is transmitted from the mobile switching center 20 (not illustrated) but the billing server 90 performs the billing process when the billing source information is transmitted from the VM server 10. That is, in the case of FIG. 14 in which the mobile switching center does not have the billing termination function, the billing server 90 can perform the billing process based on the billing source information transmitted in the step S2002b and the step S2107a, respectively.

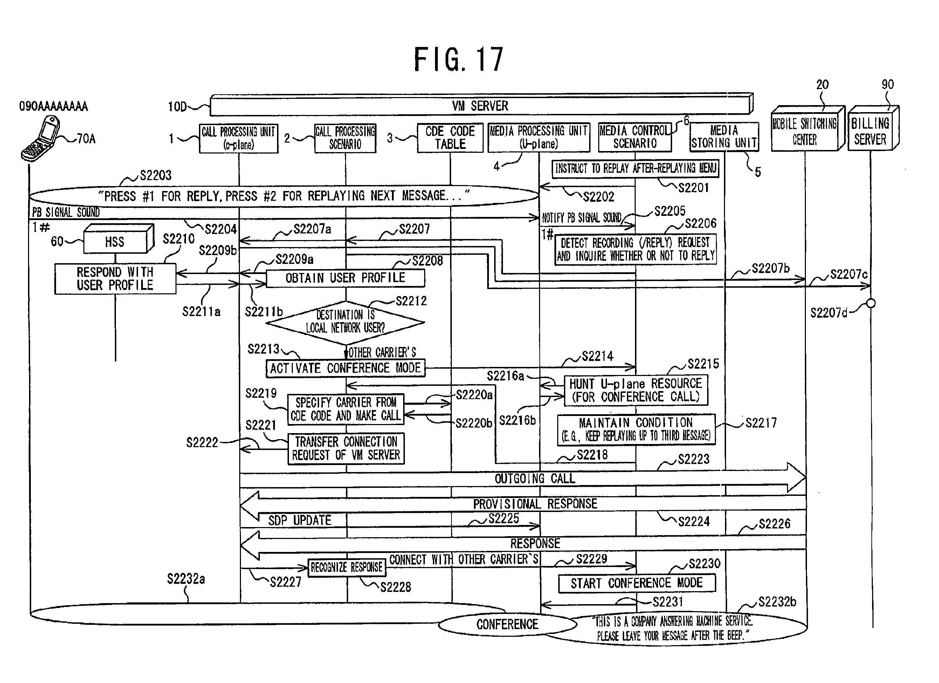

Next, an explanation will be given of a signal exchange between respective units in the VM server 10D when the Conference function is utilized with reference to FIG. 17.
In FIG. 17, the media control scenario 6 outputs an instruction of replaying a menu after the replaying (step S2201). This replay instruction is input in the media processing unit 4 (step S2202). This causes the media processing unit 4 to output a menu guidance via a voice to the mobile telephone terminal 70A (step S2203). An example menu guidance is "press #1 for reply, press #2 for replaying next message, ..., etc.".

When the user hearing this guidance message presses a button of the mobile telephone terminal 70A, a PB signal sound is input in the media processing unit 4 (step S2204). An explanation will be given of a case in which "#1" is pressed and a corresponding PB signal sound is input in the media processing unit 4. The media processing unit 4 notifies the media control scenario 6 of the input PB signal sound (step S2205). This notification allows the media control scenario 6 to detect a recording (reply) request, and transmits an inquiry signal for inquiring the whether or not a reply is possible (step S2206). This inquiring signal is received by the call processing scenario 2 (step S2207), and a termination of the billing process is instructed to the mobile switching center 20 via the call processing unit 1 (steps S2207a and S2207b). Moreover, the VM server 10 transmits the billing source information to the billing server 90 (step S2207c). The billing source information is billing source information relating to the replaying of the message by the telephone terminal 70A, and the billing server 90 performs the billing process based on this billing source information (step S2207d).

Thereafter, the call processing scenario 2 accesses the HSS 60 to obtain a user profile (step S2208), and requests the obtainment of the user profile (steps S2209a and S2209b). The HSS 60 to which the obtainment is requested replies the user profile to the call processing scenario 2 of the VM server 10D of the D company (steps S2210, S2211a, S2211b).

The call processing scenario 2 of the VM server 10D of the D company which has received the replied user profile determines whether or not the destination of the call signal (i.e., the recording source of the message) is the mobile telephone terminal of the user over the first company carrier network (step S2212). As a result of this determination, when the destination of the call signal is the mobile telephone terminal of the user over the second company carrier network, the conference mode (conference mode) by the Conference function is activated (step S2213). When the activation signal of the conference mode is transmitted to the media control scenario 6 (step S2214), the media control scenario 6 performs a hunting process of a U-plane resource for the conference (steps S2215, S2216a, S2216b). Next, the media control scenario 6 maintains the current replaying state (step S2217). When, for example, the replaying completes up to the third message currently, the replaying state of that third message is maintained.

After the media control scenario 6 maintains the current replaying state, the call processing scenario 2 refers to the CDE code table 3 to specify the carrier network, and transmits the call signal to the carrier network (steps S2218, S2219, S2220a, and S2220b). The call processing scenario 2 outputs, to the call processing unit 1, an instruction of transferring a connection request to the VM server (steps S2221, and S2222).

The call processing unit 1 transmits the call signal to the carrier network specified in the step S2220 (step S2223). This call signal can be realized by, for example, the INVITE message of the SIP. Subsequently, the call processing unit 1 receives the provisional response message via the mobile switching center 20 (step S2224). The provisional response message transmitted in the step S2224 can be realized by, for example, the 183 message of the SIP. The call processing unit 1 that has received the provisional response message performs an updating process through the SDP on the media processing unit 4 in order to start a real-time communication (step S2225).

Thereafter, the call processing unit 1 receives a response message via the mobile switching center 20 (step S2226). The response message transmitted in the step S2226 can be realized by, for example, the 200 OK message of the SIP. The call processing unit 1 that has received this response message notifies the call processing scenario 2 of this reception (step S2227). Hence, the call processing scenario 2 recognizes that there is a response from the VM server over another carrier network (step S2228), and instructs, to the media control scenario 6, a connection to the VM server over another carrier network (step S2229). The media control scenario 6 instructs the media processing unit 4 to start the conference mode (steps S2230 and S2231).

Thereafter, a call is established between the VM server 10A over the A company carrier network and the VM server 10D over the D company carrier network (step S2232b), and the voice of this call and the voice of the call (step S2232a) continuous between the mobile telephone terminal 70A that is the call-originating terminal and the VM server 10D over the D company carrier network are mixed by the Conference function of the media processing unit 4. This Conference function realizes a recording of a reply message from the mobile telephone terminal 70A to the VM server 10A over the A company carrier network. At this time, it is typical that the VM server 10A over the A company carrier network outputs a guidance relating to the VM service. An example guidance message is "This is A company answering machine center. Please leave your message after the beep".

Subsequently, when the message recording process by the telephone terminal 70A ends and the call is disconnected, the VM server 10 transmits billing source information to the billing server 90, and the billing server 90 performs the billing process based on this billing source information (not illustrated).
When the mobile switching center does not have the billing termination function explained with reference to FIG. 14, the billing process termination instruction (steps S2207a and S2207b) to the mobile switching center 20 in FIG. 17 is not performed. The billing source information transmitted in the step S2207c in FIG. 17 and the billing source information (not illustrated) transmitted from the VM server 10 after the message recording process by the telephone terminal 70A ends and the call is disconnected include an ID (identification information) that can associate the billing source information transmitted from the mobile switching center 20 with the billing source information transmitted from the VM server 10.

The billing server 90 refers to this ID, and the billing server 90 does not perform the billing process when the billing source information is transmitted from the mobile switching center 20 (not illustrated) but the billing server 90 performs the billing process when the billing source information is transmitted from the VM server 10. That is, in the case of FIG. 14 in which the mobile switching center does not have the billing termination function, the billing server 90 can perform the billing process based on the billing source information transmitted in the step S2207c, and the billing source information (not illustrated) transmitted from the VM server 10 after the call is disconnected, respectively.

(When No Conference Function is Utilized)

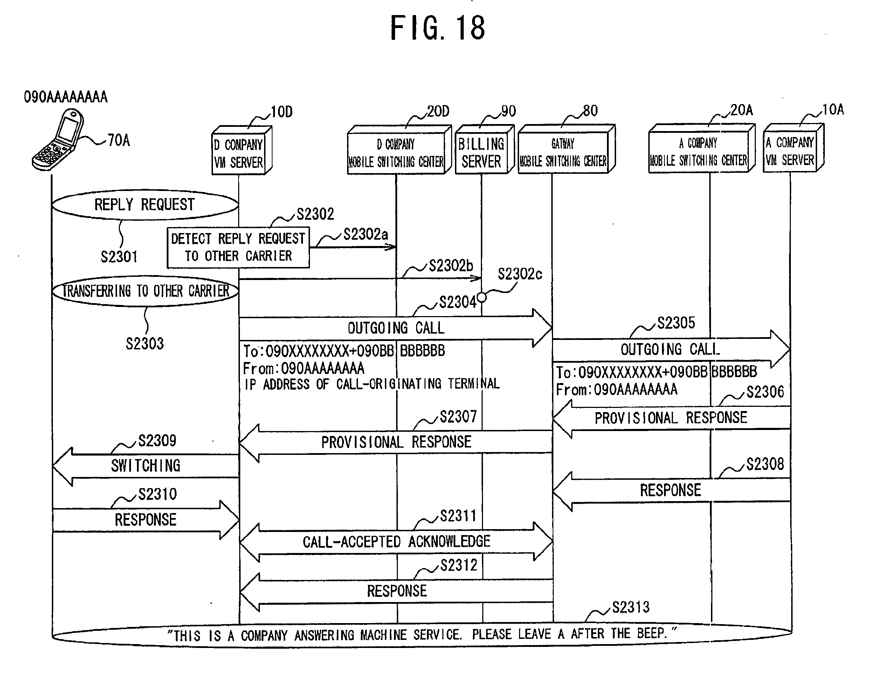

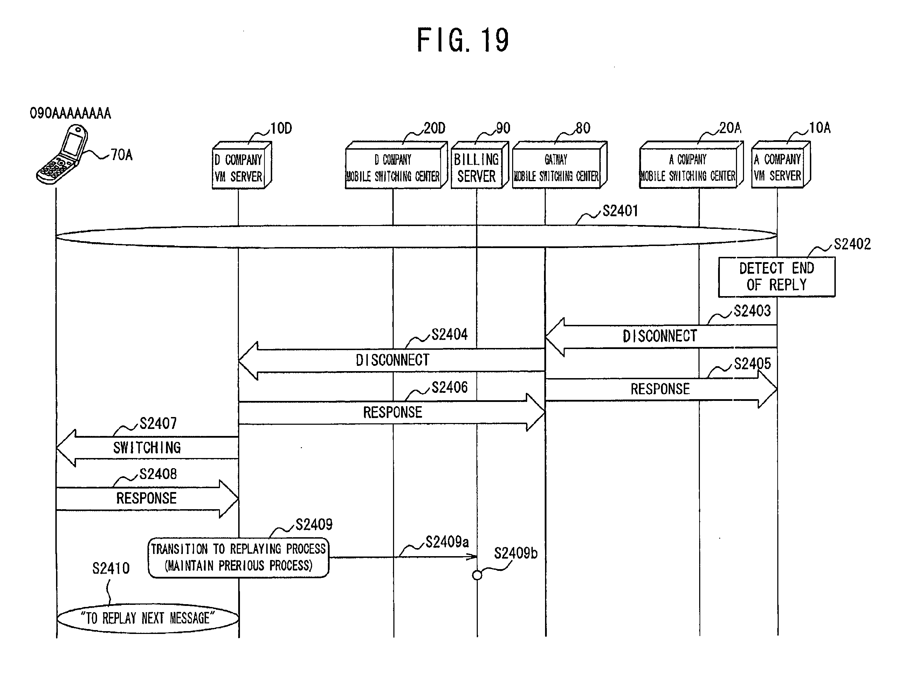

FIG. 18 and FIG. 19 illustrate a signal exchanged between respective devices when a reply while a message is being replayed is realized without the aid of the Conference function of the VM server 10D of the D company.
In FIG. 18, the mobile telephone terminal 70A which is replaying a message transmits, to the VM server 10D, a reply request to that message (step S2301). The VM server 10D of the D company that has received this reply request detects that the mobile telephone terminal 70A outputs a reply request to another carrier network (step S2302).

In this case, the VM server 10D of the D company recognizes that the billing rate is switched, and instructs the mobile switching center 20 to terminate the billing process (step S2302a). Moreover, the VM server 10 transmits billing source information to the billing server 90 (step S2302b). This billing source information is billing source information relating to the replaying of the message by the telephone terminal 70A, and the billing server 90 performs the billing process based on this billing source information (step S2302c).

In order to output a guidance message to the effect that a call is transferred to another carrier network, the VM server 10D of the D company transmits, to the mobile telephone terminal 70A, a provisional response (not illustrated) indicating that the VM server 10D is calling out. This provisional response can be realized by, for example, the 183 message of the SIP. This guidance message is the same as the conventionally well-known ring-back tone, and is a voice only in the downstream direction. An example guidance message here is "Now transferring to another carrier" (step S2303).

Thereafter, the VM server 10D transmits a call signal to the carrier network determined in the step S2302 (step S2304). This call signal can be realized by, for example, the INVITE message of the SIP. The call signal transmitted in the step S2304 includes, as the call destination "To", the telephone number "090XXXXXXXX + 090BBBBBBBB" that is the telephone number of the call-destination mobile telephone terminal having the telephone number of the VM server over the A company carrier network added to the header. Moreover, the call signal transmitted in the step S2304 includes, as the call-originating terminal "From", the telephone number "090AAAAAAAA". Furthermore, the call signal transmitted in the step S2304 is added with the SDP (the IP address of the U-plane connection destination) of the mobile telephone terminal 70A that has transmitted the reply request to the message, i.e., the call-making terminal.

The gateway switch 80 that has received the call signal transmits the call signal to a VM server 10A over the A company carrier network (step S2305). The call signal transmitted in the step S2305 includes, as the call destination "To", "090XXXXXXXX + 090BBBBBBBB" that is the telephone number of the call-destination mobile telephone terminal 70A having the telephone number of the VM server added to the header. Moreover, the call signal transmitted in the step S2305 includes, as the call-originating terminal "From", "090AAAAAAAA". The call signal transmitted in this step S2305 can be realized by, for example, the IAM message of the ISUP.

The VM server 10A over the A company carrier network which has received the call signal first transmits a provisional response message (step S2306). This provisional response message is received by the VM server 10D over the D company carrier network via the gateway switch 80 (step S2307).
The provisional response message transmitted in the step S2306 can be realized by, for example, the ACM/CPG message of the ISUP. Moreover, the provisional response message transmitted in the step S2307 can be realized by, for example, the 183 message of the SIP.

The VM server 10A of the A company carrier network transmits a response message (step S2308). The response message transmitted in the step S2308 can be realized by, for example, the ANM message of the SIP.
Subsequently, the VM server 10D of the D company that has received the provisional response message transmitted in the step S2307 transmits a switch signal to the mobile telephone terminal 70A (step S2309). The mobile telephone terminal 70A that has received the switch signal transmits a response signal (step S2310). The switch signal transmitted in the step S2309 can be realized by, for example, the Re-INVITE message of the SIP. The response message transmitted in the step S2310 can be realized by, for example, the 200 OK message of the SIP.

The provisional response message transmitted in the step S2307 is a response message needing an accepted acknowledge, and the VM server 10D of the D company and the gateway switch 80 exchange the accepted acknowledge message (step S2311). Subsequently, the gateway switch 80 transmits a response message to the VM server 10D of the D company (step S2312). The response message transmitted in the step S2312 can be realized by, for example, the 200 OK message of the SIP.

After the processes explained above, a call is established between the VM server 10A over the A company carrier network and the mobile telephone terminal 70A that is the call-originating terminal (step S2313). Establishment of the call enables the mobile telephone terminal 70A to record a reply message to the VM server 10A over the A company carrier network. At this time, it is typical that the VM server 10A over the A company carrier network outputs a guidance relating to the VM service. An example guidance message is "This is A company answering machine center. Please leave your message after the beep".

Turning now to FIG. 19, and in a state in which the call between the VM server 10A over the A company carrier network and the mobile telephone terminal 70A that is the call-originating terminal is established (step S2401), the VM server 10A of the A company detects a termination of the recording of the reply message (step S2402). This causes the VM server 10A of the A company to transmit a disconnecting signal (step S2403), and this disconnecting signal is received by the VM server 10D of the D company via the gateway switch 80 (step S2404). The disconnecting signal transmitted in the step S2403 can be realized by, for example, the REL (Release) message of the ISUP. Moreover, the disconnecting signal transmitted in the step S2404 can be realized by, for example, the Bye message of the SIP.

In response to the disconnecting signal transmitted in the step S2403, the gateway switch 80 transmits a disconnection response signal (step S2405). The disconnection response signal transmitted in the step S2405 can be realized by, for example, the RLC (Release Complete) message of the ISUP. In response to the response signal transmitted in the step S2404, the VM server 10D of the D company transmits a response signal (step S2406). The response signal transmitted in the step S2406 can be realized by, for example, the 200 OK (Bye) message of the SIP.

Moreover, the VM server 10D of the D company transmits a switch signal to the mobile telephone terminal 70A (step S2407). The mobile telephone terminal 70A that has received the switch signal transmits a response signal (step S2408). The switch signal transmitted in the step S2407 can be realized by, for example, the Re-INVITE message of the SIP. The response signal transmitted in the step S2408 can be realized by, for example, the 200 OK message of the SIP.

Thereafter, the replay call continuing function of the VM server 10D of the D company recognizes switching of the content of the call, and the process progresses to a replaying process (step S2409). This causes the VM server 10D to recognize that the billing rate is switched, and to transmit billing source information to the billing server 90 (step S2409a). This billing source information is billing source information relating to a direct telephone call with the telephone terminal 70B based on an outgoing call made from the telephone terminal 70A, and the billing server 90 performs the billing process based on this billing source information (step S2409b). Subsequently, the previous replaying process so far is continued. Hence, the replaying process up to the current time is continued.

That is, a change from one state to another state between the replaying state of the voice message and the recording state of the voice message to another VM server corresponding to the recording originator terminal of the voice message can be detected as switching of the content of the telephone call. This enables the VM server 10 to transmit the billing source information to the billing server 90, and the billing server 90 can perform the billing process.

It is typical that in order to let the user of the mobile telephone terminal 70A to know that the replaying process is continued, a guidance to that effect is output. An example guidance message is "next message is replayed" (step S2410).
Thereafter, when the replaying process by the telephone terminal 70A ends and the call is disconnected, the VM server 10D transmits billing source information to the billing server 90, and the billing server 90 performs the billing process based on this billing source information (not illustrated).

When the mobile switching center does not have the billing termination function explained with reference to FIG. 14, the billing process termination instruction (step S2302a) to the mobile switching center 20 in FIG. 18 is not performed. The billing source information transmitted in the step S2302b in FIG. 18 and the billing source information transmitted in the step S2409a in FIG. 19 include an ID (identification information) that can associate the billing source information transmitted from the mobile switching center 20 with the billing source information transmitted from the VM server 10.

The billing server 90 refers to this ID, and the billing server 90 does not perform the billing process when the billing source information is transmitted from the mobile switching center 20 (not illustrated) but the billing server 90 performs the billing process when the billing source information is transmitted from the VM server 10. That is, in the case of FIG. 14 in which the mobile switching center does not have the billing termination function, the billing server 90 can perform the billing process based on the billing source information transmitted in the step S2302b and the step S2409a, respectively.

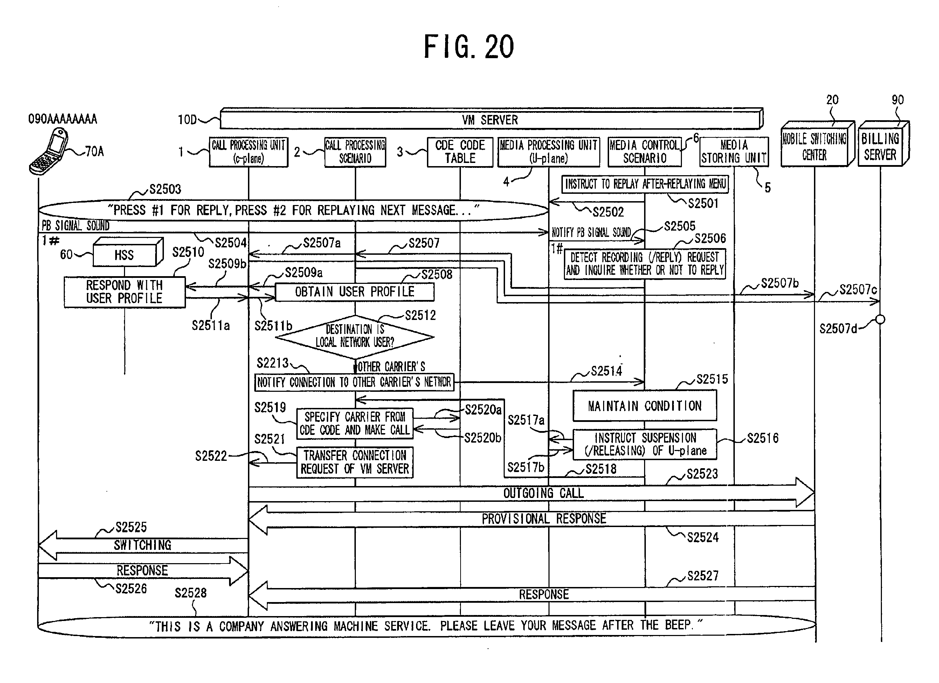

Next, an explanation will be given of a signal exchange between respective units in the VM server 10D when no Conference function is utilized with reference to FIG. 20.
In FIG. 20, the media control scenario 6 outputs an instruction of replaying a menu after the replaying (step S2501). This replay instruction is input in the media processing unit 4 (step S2502). This causes the media processing unit 4 to output a menu guidance via a voice to the mobile telephone terminal 70A (step S2503). An example menu guidance is "press #1 for reply, press #2 for replaying next message, ..., etc.".

When the user hearing this guidance message presses a button of the mobile telephone terminal 70A, a PB signal sound is input in the media processing unit 4 (step S2504). An explanation will be given of a case in which "#1" is pressed and a corresponding PB signal sound is input in the media processing unit 4. The media processing unit 4 notifies the media control scenario 6 of the input PB signal sound (step S2505). This notification allows the media control scenario 6 to detect a recording (reply) request, and transmits an inquiry signal for inquiring the whether or not a reply is possible (step S2506). This inquiring signal is received by the call processing scenario 2 (step S2507), and a termination of the billing process is instructed to the mobile switching center 20 via the call processing unit 1 (steps S2507a and S2507b). Moreover, the VM server 10 transmits the billing source information to the billing server 90 (step S2507c). The billing source information is billing source information relating to the replaying of the message by the telephone terminal 70A, and the billing server 90 performs the billing process based on this billing source information (step S2507d).

Thereafter, the call processing scenario 2 accesses the HSS 60 to obtain a user profile (step S2508), and requests the obtainment of the user profile (steps S2509a and S2509b). The HSS 60 to which the obtainment is requested replies the user profile to the call processing scenario 2 of the VM server 10D of the D company (steps S2510, S2511a, S2511b). The call processing scenario 2 of the VM server 10D of the D company which has received the replied user profile determines whether or not the destination of the call signal (i.e., the recording source of the message) is the mobile telephone terminal of the user over the first company carrier network (step S2512). As a result of this determination, when the destination of the call signal is the mobile telephone terminal of the user over the second company carrier network, the conference mode (conference mode) by the Conference function is activated (step S2513). When the activation signal of the conference mode is transmitted to the media control scenario 6 (step S2514), the media control scenario 6 maintains the current replaying state (step S2515). When, for example, the replaying completes up to the third message currently, the replaying state of that third message is maintained.

Next, the media control scenario 6 instructs a suspension (release) of the U-plane to the media processing unit 4 (steps S2516, S2517a, S2517b). After the instruction of suspending (releasing) the U-plane completes, the call processing scenario 2 refers to the CDE code table 3 to specify the carrier network, and transmits a call signal to that carrier network (steps S2518, S2519, S2520a, and S2520b). Next, the call processing scenario 2 outputs, to the call processing unit 1, an instruction of transferring the connection request to the VM server (steps S2521, S2522).

The call processing unit 1 transmits the call signal to the carrier network specified in the step S2519 (step S2523). This call signal can be realized by, for example, the INVITE message of the SIP. Subsequently, the call processing unit 1 receives the provisional response message via the mobile switching center 20 (step S2524). The provisional response message transmitted in the step S2524 can be realized by, for example, the 183 message of the SIP. The call processing unit 1 that has received the provisional response message transmits the switch signal to the mobile telephone terminal 70A (step S2525). The mobile telephone terminal 70A that has received the switch signal transmits the response signal (step S2526). The switch signal transmitted in the step S2525 can be realized by, for example, the Re-INVITE message of the SIP. The response signal transmitted in the step S2526 can be realized by, for example, the 200 OK message of the SIP.

Subsequently, the gateway switch 80 transmits the response message, and the call processing unit 1 receives this response message (step S2527). The response message transmitted in the step S2527 can be realized by, for example, the 200 OK message of the SIP.
After the processes explained above, a call is established between the VM server 10A over the A company carrier network and the mobile telephone terminal 70A that is the call-originating terminal (step S2528). Establishment of the call enables the mobile telephone terminal 70A to record a reply message to the VM server 10A over the A company carrier network. At this time, it is typical that the VM server 10A over the A company carrier network outputs a guidance relating to the VM service. An example guidance message is "This is A company answering machine center. Please leave your message after the beep".

Subsequently, when the message recording process by the telephone terminal 70A ends and the call is disconnected, the VM server 10D transmits billing source information to the billing server 90, and the billing server 90 performs the billing process based on this billing source information (not illustrated).
When the mobile switching center does not have the billing termination function explained with reference to FIG. 14, the billing process termination instruction (steps S2507a and S2507b) to the mobile switching center 20 in FIG. 20 is not performed. The billing source information transmitted in the step S2507c in FIG. 20 and the billing source information (not illustrated) transmitted from the VM server 10 after the message recording process by the telephone terminal 70A ends and the call is disconnected include an ID (identification information) that can associate the billing source information transmitted from the mobile switching center 20 with the billing source information transmitted from the VM server 10.

The billing server 90 refers to this ID, and the billing server 90 does not perform the billing process when the billing source information is transmitted from the mobile switching center 20 (not illustrated) but the billing server 90 performs the billing process when the billing source information is transmitted from the VM server 10. That is, in the case of FIG. 14 in which the mobile switching center does not have the billing termination function, the billing server 90 can perform the billing process based on the billing source information transmitted in the step S2507c, and the billing source information (not illustrated) transmitted from the VM server 10 after the call is disconnected, respectively.

### (Other Example Application)

The present invention is applicable to a service that provides a privilege (e.g., an issuance of a discount coupon relating to a billing) in accordance with a replaying period of a message or a recording period of a message via a voice call. That is, with a voice call being in a connected state, when a process switches from a message replaying process to a recording process or vice versa, a privilege corresponding to a replaying period and a privilege corresponding to a recording period can be separately provided with different contents.
Likewise, for a service that enables a donation through a billing in accordance with a message replaying period and a message recording period, the amount of donation corresponding to a replaying period and the amount of donation corresponding to a recording period can be separately set.

### (Speech Communication System)

The above-explained voice communication server apparatus or voice mail server apparatus configures a voice communication system together with a mobile switching center having a billing termination function of terminating a transmission of billing source information to a billing server. According to this voice communication system, a process by the mobile switching center can be terminated, and a service can be provided equally while the connection state of a call is maintained.

### (Summary)

According to the background arts, in a voice mail service and an answering machine service, when a reply message is recorded following to the replaying of a message with a call being connected, switching of the content of the telephone call cannot be detected, and thus a family discount service is inapplicable, but when a call is once disconnected and a new outgoing call is made to record a message, the family discount service is applicable. It is common in recording of a reply message but the family discount service is applied or is not applied depending on an operation given by a user, and thus the service cannot be equally provided.

According to the present invention, however, a transmission of billing source information utilized for a billing process to a billing server is terminated, and the connection of a call is continued, when switching of the content of the telephone call is detected, the billing source information is transmitted to the billing server. This eliminates an occasion that the service is applied or is not applied depending on an operation given by the user, thereby providing the service equally.
The scope and spirit of the present invention are not limited to the illustrated and described exemplified embodiments, and include all embodiments that bring about the equivalent advantages subjected to the present invention. The scope and spirit of the present invention are not limited to a combination of the features of the present invention set forth in respective claims, but can be defined by all desired combinations of specific features among all of individual disclosed features.

### Industrial Applicability

The present invention is applicable to a voice communication server apparatus that provides a service, such as a voice mail service or an answering machine service, to a telephone terminal like a mobile telephone terminal.

### Reference Signs List

| | |
|---|---|
| 1 | Call processing unit |
| 2 | Call processing scenario |
| 4 | Media processing unit |
| 5 | Media storing unit |
| 6 | Media control scenario |
| 10, 10A, 10D | Voice mail server apparatus |
| 20, 20A | Mobile switching center |
| 30 | SMS transmission server |
| 40 | Third company carrier network voice mail server apparatus |
| 50 | MNP-DB |
| 60 | HSS |
| 70A, 70B | Telephone terminal |
| 80 | Gateway switch |
| 90 | Billing server |
| 100 | Speech communication server apparatus |

## Claims

1. A voice communication server apparatus comprising:
a detecting unit configured to detect switching of a content of a call while a connection of the call is maintained to an apparatus having a function of transmitting billing source information for a billing process to a billing server; and
a billing source information transmitting unit configured to generate the billing source information for the billing process when the detecting unit detects the switching of the content of the telephone call to transmit the generated billing source information to the billing server.

2. The voice communication server apparatus according to claim 1, further comprising a storing unit configured to store a voice message,
wherein the detecting unit detects, as the switching of the content of the telephone call, a change from one state to another state between a replaying state of the voice message stored in the storing unit and a recording state of a voice message in the storing unit.

3. The voice communication server apparatus according to claim 1, further comprising a storing unit that stores a voice message,
wherein the detecting unit detects, as the switching of the content of the telephone call, a change from one state to another state between a replaying state of the voice message stored in the storing unit and a calling state originated by an outgoing call made to a recording source terminal of the voice message.

4. The voice communication server apparatus according to claim 1, further comprising a storing unit configured to store a voice message,
wherein the detecting unit detects, as in the switching of the content of the telephone call, a change from one state to another state between a replaying state of the voice message stored in the storing unit and a recording state of a voice message in a storing unit of another voice communication server apparatus corresponding to a recording source terminal of the voice message.

5. The voice communication server apparatus according to any one of claims 1 to 4, wherein
the billing source information includes information indicating a type of the content of the telephone call, and information indicating a duration of the telephone call, and
the billing server performs billing process based on the billing source information.

6. The voice communication server apparatus according to any one of claims 1 to 5, further comprising a non-billing instruction unit that instructs a termination of a transmission of the billing source information.

7. A voice communication system comprising:
the voice communication server apparatus according to claim 6; and
a mobile switching center comprising a billing termination unit configured to terminate a transmission of the billing source information to the billing server in response to an instruction to terminate a transmission of the billing source information instructed by the non-billing instruction unit.

8. A voice communication system comprising the voice communication server apparatus according to any one of claims 1 to 5, wherein
the billing source information transmitting unit transmits billing source information including identifier information capable of associating billing source information transmitted from the mobile switching center with the billing source information transmitted from the voice communication server device, and
the voice communication system further comprises a billing server having a billing process function for performing a billing process with respect to only either one of the billing source information transmitted from the mobile switching center and the billing source information transmitted from the billing source information transmitting unit.
